(19) Europäisches Patentamt
European Patent Office
Office européen des brevets

(11) **EP 3 056 041 B1**

(12) **EUROPEAN PATENT SPECIFICATION**

(45) Date of publication and mention
of the grant of the patent:
**02.12.2020 Bulletin 2020/49**

(21) Application number: **13895253.6**

(22) Date of filing: **09.10.2013**

(51) Int Cl.:
**H04W 16/14** (2009.01)

(86) International application number:
**PCT/SE2013/051189**

(87) International publication number:
**WO 2015/053670 (16.04.2015 Gazette 2015/15)**

(54) **ENABLING MITIGATION OF INTERFERENCE BETWEEN AN EXTERNAL WIRELESS SYSTEM AND A MOBILE COMMUNICATION SYSTEM**

INTERFERENZMINDERUNG ZWISCHEN EINEM EXTERNEN DRAHTLOSEN SYSTEM UND EINEM MOBILKOMMUNIKATIONSSYSTEM

ACTIVATION DE LIMITATION DE BROUILLAGE ENTRE UN SYSTÈME SANS FIL EXTERNE ET UN SYSTÈME DE COMMUNICATION MOBILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**17.08.2016 Bulletin 2016/33**

(73) Proprietor: **Telefonaktiebolaget LM Ericsson (publ)**
**164 83 Stockholm (SE)**

(72) Inventors:
• **TERCERO VARGAS, Miurel Isabel**
**171 44 Solna (SE)**

• **KAZMI, Muhammad**
**167 39 Bromma (SE)**

(74) Representative: **Ericsson**
**Patent Development**
**Torshamnsgatan 21-23**
**164 80 Stockholm (SE)**

(56) References cited:
**WO-A1-2011/123550**    **WO-A2-03/090037**
**GB-A- 2 489 702**    **US-A1- 2011 242 969**
**US-A1- 2012 040 620**    **US-A1- 2012 069 766**
**US-A1- 2012 327 869**    **US-A1- 2012 329 515**
**US-A1- 2013 017 794**

**Description**

**TECHNICAL FIELD**

The proposed technology generally relates to different ways of enabling mitigation of interference between an External Wireless System, EWS, and a mobile communication system.

**BACKGROUND**

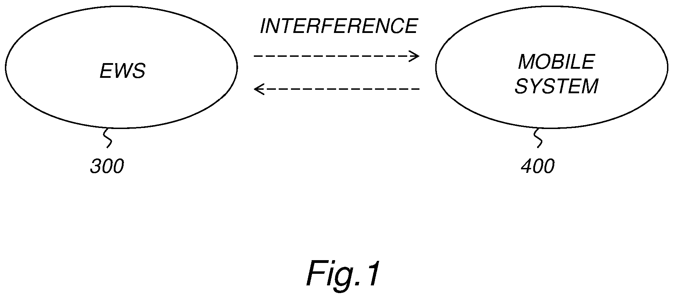

Mobile communication systems such as cellular communication systems may co-exist with various EWS systems that may affect the operation of the mobile communication systems. The other way around, the mobile communication systems may affect the operation of the EWS systems. As schematically illustrated in Figure 1, there may generally be interference, i.e. radio interference, between an EWS system 300 and a mobile system 400.

For example, a mobile or cellular system may co-exist with an EWS system, which operate in a frequency band (non-cellular band) that is adjacent or close in frequency to the mobile system. In some situations/events, the EWS will cause interference to the mobile system, e.g. affecting the operation of radio network nodes such as base stations and/or User Equipment, UE, such as mobile terminals or the like. In particular based on the recent studies performed by the European Conference of Postal and Telecommunications Administrations, CEPT, the duplex gap of band 3/III (i.e. 1800 MHz range) is most likely to be assigned for using the Programme Making and Special Event, PMSE, equipment such as wireless microphones. The PMSE is an example of an EWS system which will operate very close to a frequency band (1800 MHz) in which important technologies like Global System for Mobile communications, GSM, High Speed Packet Access, HSPA, and Long Term Evolution, LTE, extensively operate. The operation of PMSE in 1800 MHz will adversely affect the mobile or cellular operation in these bands, e.g. LTE/HSPA/GSM band 3/III. The mobile or cellular system may thus be affected by interference originating from a PMSE system or in general interference caused by any other EWS. The other way around, sensitive EWS systems such as medical wireless systems may also need protection from interference from mobile communication systems.

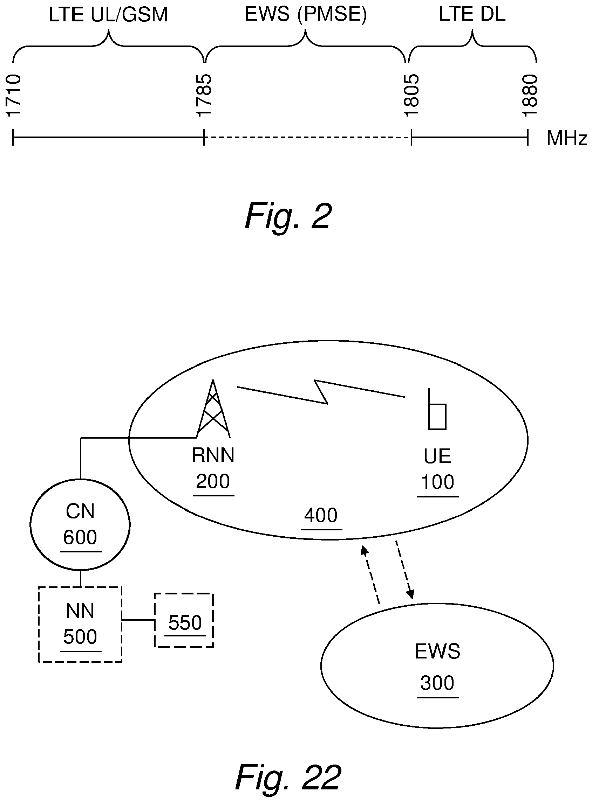

By way of example, CEPT is currently working on a compatibility report [1] that deals with adjacent band compatibility between the mobile networks and programme making and special event or wireless microphones in the 1800 MHz range under its work program called "Programme SE7_14". This report is in public consultation and a working assumption is that PMSE is going to be assigned in the 1800 MHz frequency range. As schematically illustrated in Figure 2, this frequency range corresponds to the duplex gap of the 1710-1785/1805-1880 MHz mobile band, also known as the LTE Frequency Division Duplex FDD, band 3 or Universal Terrestrial Radio Access, UTRA, FDD band III. The duplex gap of band 3/III is 20 MHz as shown in Figure 2. The mobile technologies including GSM/EDGE (Enhanced Data rates for GSM Evolution), WCDMA (Wideband Code Division Multiple Access)/UTRA FDD and LTE/E-UTRA FDD which operate in this band will be affected due to introduction of the PMSE in the duplex. The PMSE may also operate in UHF band in some regions, e.g. at 700 MHz.

The SE7 group discusses possible solutions to minimize the interference impact from PMSE to mobile systems. The possible proposed solutions are a new Block Edge Mask, BEM, for PMSE, a frequency guard band or a mix of both. The BEM is required to be met by the radio transmitter of the PMSE system at the edge of those frequencies where PMSE would be allowed to operate. Such a solution will minimize the impact of interference but does not eliminate it completely.

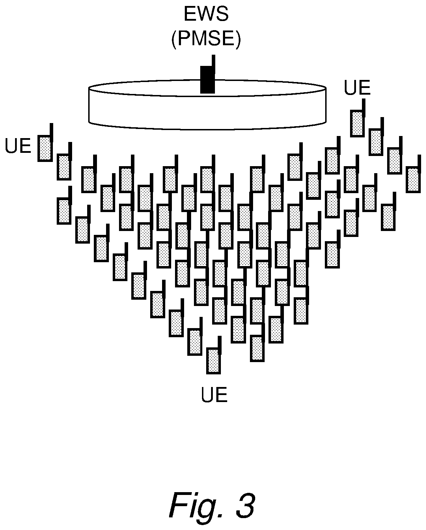

An example of a quite general scenario in which an EWS system such as PMSE equipment is surrounded by multiple UEs is illustrated in Figure 3.

PMSE is a special type of EWS system, i.e. external with respect to the mobile system. Other examples of EWS are short range device (SRDs), medical body network (MBAN), devices with Radio Frequency IDentification (RFID), wireless musical instruments and so forth.

PMSE is typically used in events such as conferences, concerts, theater, and so forth. A mobile user will likely try to use its mobile phone during these events, so it is possible that the user equipment experiences severe interference from the EWS especially when both are used in the same band, e.g. when the UE operates in band 111/3 and EWS operates in the duplex gap of band III/3. Examples of some possible identified scenarios are summarized in Table 1.

Table 1: Summary of example scenarios.

| Scenarios | Interferer | Victim | Environment |
|-----------|------------|--------|-------------|
| 1 | PMSE | LTE UE | Outdoor |
| 2 | PMSE | LTE BS | |
| 3 | PMSE | GSM BS | |

(continued)

| Scenarios | Interferer | Victim | Environment |
|-----------|-----------|--------|-------------|
| 4 | PMSE | LTE UE | Indoor |
| 5 | PMSE | LTE Pico BS | |
| 6 | PMSE | GSM Pico BS | |

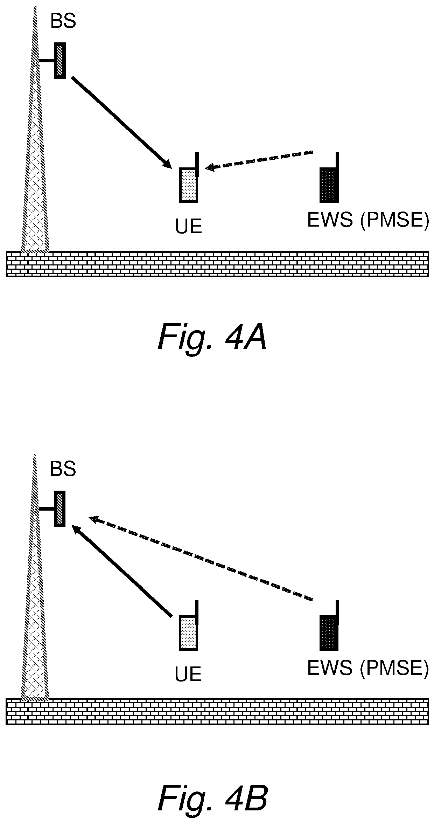

Figures 4A and 4B schematically illustrate two different outdoor scenarios where an EWS system causes interference to a mobile communication system.

As an outdoor scenario one can imagine an outdoor concert, e.g. at a city square or an outdoor arena. Even in this situation a user may need to be connected and be able to check e-mails, receive calls, SMS or MMS.

Figure 4A illustrates an example where a UE receives information from a base station, BS. At the same time an EWS system such as a PMSE is in the close vicinity interfering with the UE.

In a slightly different scenario, multiple users may want to use their mobile to communicate e.g. take picture or record the event and share/upload a file causing transmissions to the network.

Figure 4B illustrates an example where a base station, BS, receives radio signals from the UEs served by the BS but also interfering radio signals from the closely located EWS, e.g. a PMSE.

Figures 5A and 5B schematically illustrate two different indoor scenarios where an EWS system causes interference to a mobile communication system.

Examples of indoor scenarios can be a theater, cinema, conference room, assembly hall and so forth. A particular example may be a room or hall where indoor UEs communicate with a low power base station, BS, such as pico base station.

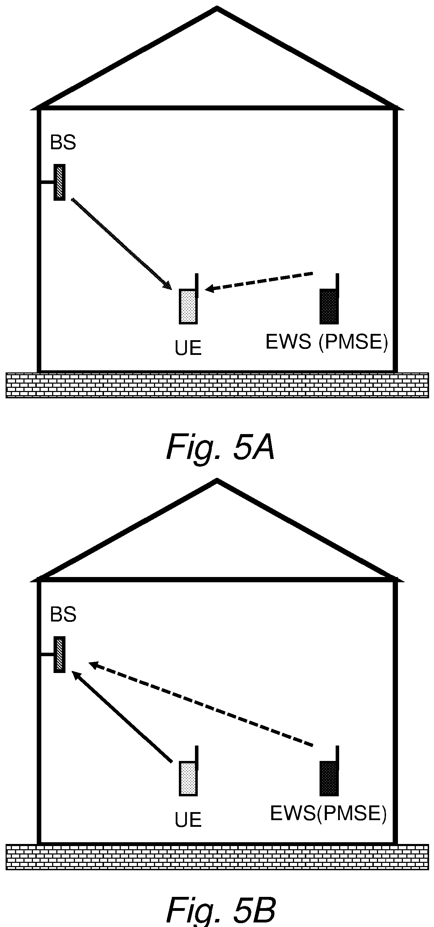

Figure 5A illustrates an example where an EWS system such as a PMSE is interfering with a UE.

Figure 5B illustrates an example where a base station, BS, receives radio signals from a UE but at the same time a closely located EWS system such as a PMSE causes interference at the BS receiver.

As mentioned, there may be a need, even stirred by regulatory requirements, to protect the EWS system from the interference caused by mobile communication systems. This may the case for medical wireless applications, such as the use of a medical body network.

The existing solutions to mitigate interference between PMSE and a mobile system include introducing new Block Edge Mask, BEM, requirements for PMSE, defining a frequency guard band between the PMSE and the mobile system.

A drawback with setting a new BEM for PMSE is that this solution will not protect communication systems from potential interference coming from legacy PMSE. Also this solution is discussed in European regulations, meaning that this will be a regional requirement. The requirements in other regions such as America and Asia may be less stringent and most likely BEM will not be defined by other regional regulatory organizations. Therefore there is a risk that PMSE devices developed in one region but used in another region may not meet the same radio requirements.

In addition, the introduction of a frequency guard band as a solution for this problem will cause a waste of spectrum.

There are solutions to mitigate interference from in-device EWS systems causing interference to mobile systems i.e. when the two systems co-exist in the same UE or wireless device. In this case the in-device UE or subscriber of the UE has considerable control over the operation of non-mobile UE. However, PMSE equipment is externally located and in particular used at a location where there are very large number of subscribers concentrated at one location e.g. assembly hall. Therefore solutions used for in-device co-existence cannot be efficiently used for mitigating interference caused by the EWS like PMSE towards the mobile or cellular systems.

There is of course also the possibility to apply very limiting restrictions on the operation of either type of system in order to reduce the interference between an EWS system and a mobile communication system. However, this will generally have severe negative impact of the performance of the EWS system and/or the mobile system.

US 2012/0040620 relates to a method to trigger In-Device Coexistence (IDC) interference mitigation, where a wireless device comprises a first radio module and a co-located second radio module. The IDC triggering mechanism relies on radio signal measurement results and a corresponding condition to determine whether any IDC interference avoidance solution needs to be triggered, and the radio signal measurements include received signal strength (e.g. RSRP or RSSI), received signal quality (e.g. RSRQ or CINR), received interference power level or channel quality indicator (CQI).

## SUMMARY

It is an object to provide an efficient and/or flexible way of enabling mitigation of interference between an EWS system and a mobile communication system.

In particular it is desirable to provide efficient methods for enabling mitigation of interference on the UE side and the network side, and to provide corresponding implementations of user equipment, a radio network node and a wireless device.

These and other objects are met by embodiments of the proposed technology.

The invention is defined by the method performed by a User Equipment of independent claim 1, by the method performed by a radio network node of independent claim 5, by the User Equipment of independent claim 6 and by the radio network node of independent claim 8.

According to a first example useful for understanding the invention, there is provided a method performed by a User Equipment, UE, for enabling mitigation of interference between an External Wireless System, EWS, and a mobile communication system. The UE detects an EWS event involving EWS operation interfering with the operation of the mobile communication system provided at least one interference condition is fulfilled. The interference condition(s) includes a first condition based on a frequency relation between a representation of an operating frequency of the EWS and a representation of a reference frequency. The UE enables the mitigation of interference based on event information representing the EWS event.

In this way, an efficient and/or flexible way of enabling mitigation of interference between an EWS system and a mobile communication system is provided on the UE side. In particular, mitigation of interference is only enabled or applied when necessary, e.g. when a representation of the operating frequency of the EWS and a representation of the reference frequency are related in a predefined way according to a frequency relation. This effectively prevents unnecessary degradation of the performance of the mobile system and/or the EWS system, and ensures satisfactory system operation.

According to a second example, there is provided a method performed by a radio network node for enabling mitigation of interference between an External Wireless System, EWS, and a mobile communication system. The radio network node configures a User Equipment, UE, or other network node for detecting and reporting an EWS event involving EWS operation interfering with the operation of the mobile communication system provided at least one interference condition is fulfilled. The interference condition(s) includes a first condition based on a frequency relation between a representation of an operating frequency of the EWS and a representation of a reference frequency. The radio network node receives event information representing the EWS event from the UE or the other network node to enable the mitigation of interference.

In this way, an efficient way of enabling mitigation of interference between an EWS system and a mobile communication system is provided on the network side. The radio network node configures the UE or other network node for detecting and reporting an EWS event, and then receives the relevant event information to enable mitigation of interference. This maintains satisfactory system performance.

According to a third example, there is provided a User Equipment, UE, operable to enable mitigation of interference between an External Wireless System, EWS, and a mobile communication system. The UE comprises a detector operable to detect an EWS event involving EWS operation interfering with the operation of the mobile communication system provided at least one interference condition is fulfilled. The interference condition(s) includes a first condition based on a frequency relation between a representation of an operating frequency of the EWS and a representation of a reference frequency. The UE further comprises a report module operable to report event information representing the EWS event to a radio network node to enable the mitigation of interference.

This provides a UE implementation for enabling mitigation of interference between an EWS system and a mobile communication system in an efficient way.

According to a fourth example, there is provided a User Equipment, UE, operable to enable mitigation of interference between an External Wireless System, EWS, and a mobile communication system. The UE comprises a detector operable to detect an EWS event involving EWS operation interfering with the operation of the mobile communication system provided at least one interference condition is fulfilled. The interference condition(s) includes a first condition based on a frequency relation between a representation of an operating frequency of the EWS and a representation of a reference frequency. The UE further comprises an interference mitigation module operable to initiate or perform the mitigation of interference based on event information representing the EWS event.

This provides an alternative UE implementation for enabling mitigation of interference between an EWS system and a mobile communication system.

According to a fifth example, there is provided a radio network node operable to enable mitigation of interference between an External Wireless System, EWS, and a mobile communication system. The radio network node comprises a configuration module operable to configure a User Equipment, UE, or other network node for detecting and reporting an EWS event involving EWS operation interfering with the operation of the mobile communication system provided at least one interference condition is fulfilled. The interference condition(s) includes a first condition based on a frequency relation between a representation of an operating frequency of the EWS and a representation of a reference frequency. The UE further comprises a receiver operable to receive event information representing the EWS event from the UE or the other network node to enable the mitigation of interference.

This provides a radio network node implementation for enabling mitigation of interference between an EWS system and a mobile communication system in an efficient way.

According to a sixth example, there is provided a wireless device operable to enable mitigation of interference between an External Wireless System, EWS, and a mobile communication system. The wireless device comprises a detection module for detecting an EWS event involving EWS operation interfering with the operation of the mobile communication system provided at least one interference condition is fulfilled. The interference condition(s) includes a first condition based on a frequency relation between a representation of an operating frequency of the EWS and a representation of a reference frequency. The wireless device further comprises an enabling module for enabling the mitigation of interference based on event information representing the EWS event.

This provides a wireless device for enabling mitigation of interference between an EWS system and a mobile communication system in an efficient way

Other advantages will be appreciated when reading the detailed description.

**BRIEF DESCRIPTION OF THE DRAWINGS**

The embodiments, together with further objects and advantages thereof, and examples may best be understood by making reference to the following description taken together with the accompanying drawings, in which:

Figure 1 is a schematic diagram illustrating an example of interference between an EWS system and a mobile system.

Figure 2 is a schematic diagram illustrating an example of the frequency allocation of different systems.

Figure 3 is a schematic diagram illustrating an example of a quite general scenario in which an EWS system such as PMSE equipment is surrounded by multiple UEs.

Figures 4A and 4B are schematic diagrams schematically illustrating two different outdoor scenarios where an EWS system causes interference to a mobile communication system.

Figures 5A and 5B are schematic diagrams schematically illustrating two different indoor scenarios where an EWS system causes interference to a mobile communication system.

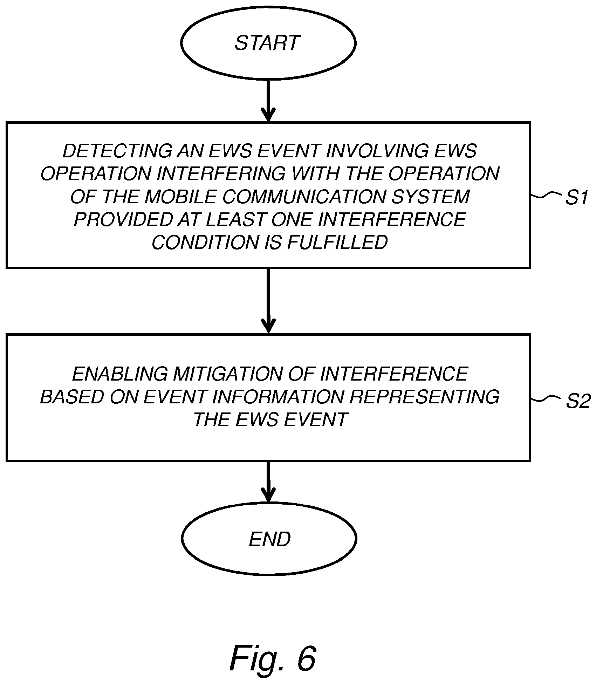

Figure 6 is a schematic flow diagram illustrating an example of a method performed by a UE for enabling mitigation of interference between an External Wireless System, EWS, and a mobile communication system.

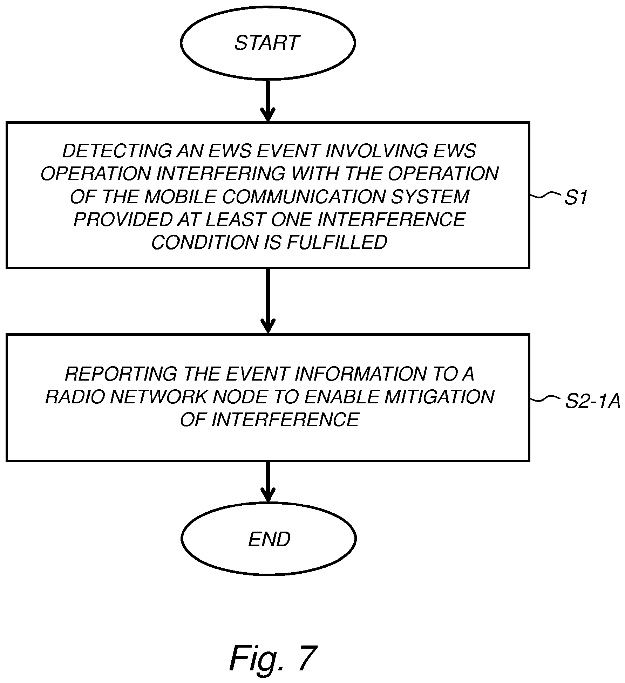

Figure 7 is a schematic flow diagram illustrating an example of a method performed by a UE for enabling mitigation of interference between an External Wireless System, EWS, and a mobile communication system.

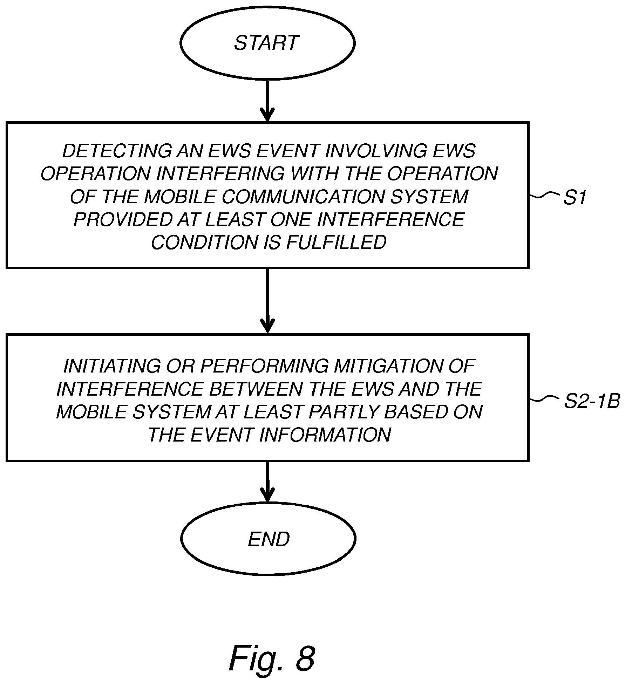

Figure 8 is a schematic flow diagram illustrating an example of a method performed by a UE for enabling mitigation of interference between an External Wireless System, EWS, and a mobile communication system.

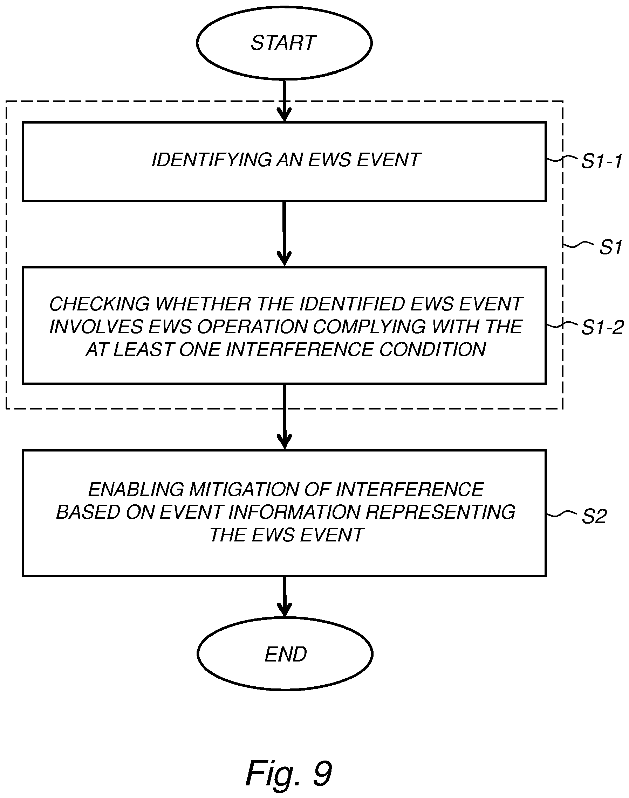

Figure 9 is a schematic flow diagram illustrating an example of a method performed by a UE for enabling mitigation of interference between an External Wireless System, EWS, and a mobile communication system.

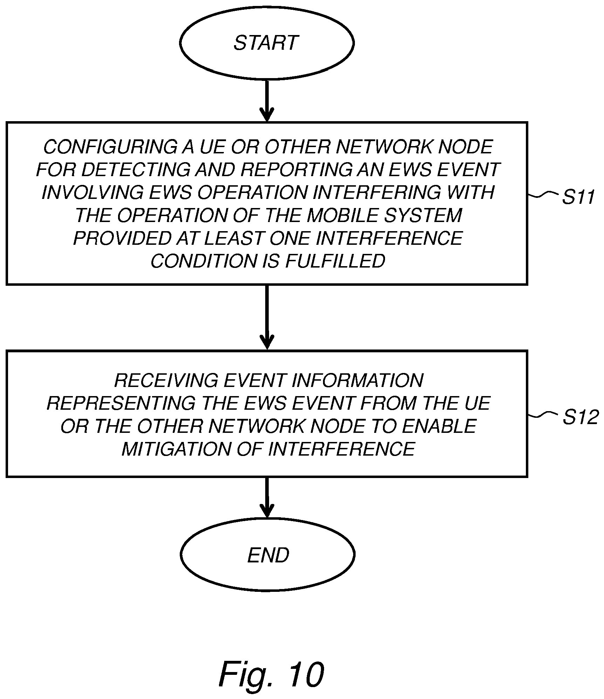

Figure 10 is a schematic flow diagram illustrating an example of a method performed by a radio network node for enabling mitigation of interference between an External Wireless System, EWS, and a mobile communication system.

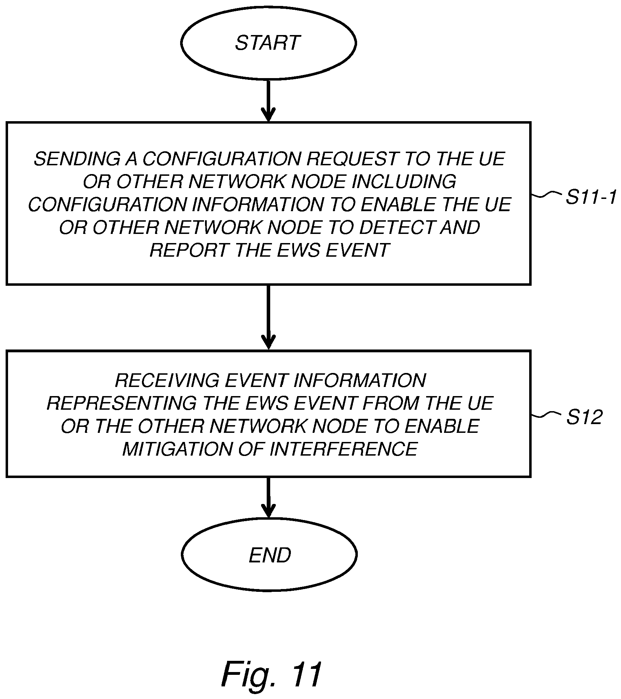

Figure 11 is a schematic flow diagram illustrating an example of a method performed by a radio network node for enabling mitigation of interference between an External Wireless System, EWS, and a mobile communication system.

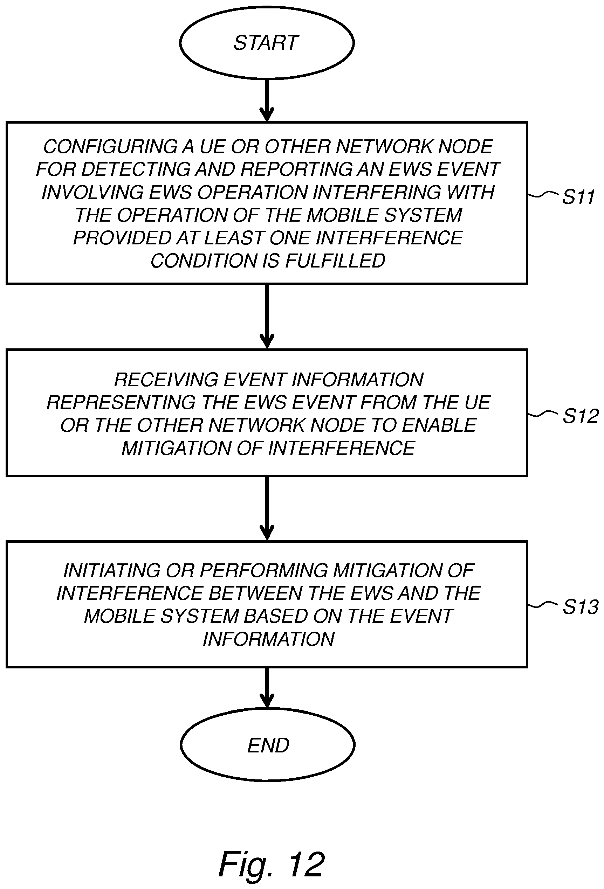

Figure 12 is a schematic flow diagram illustrating an example of a method performed by a radio network node for enabling mitigation of interference between an External Wireless System, EWS, and a mobile communication system.

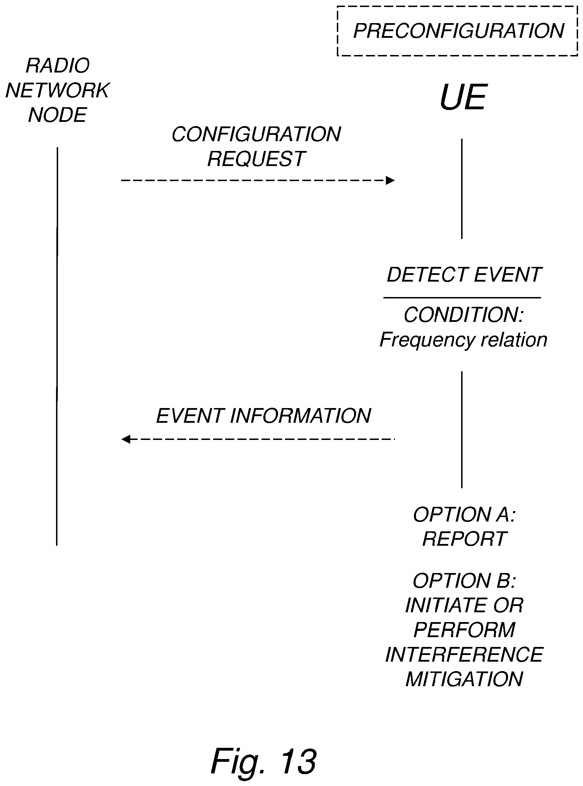

Figure 13 is a schematic diagram illustrating an example of signaling and/or actions from the perspective of a UE.

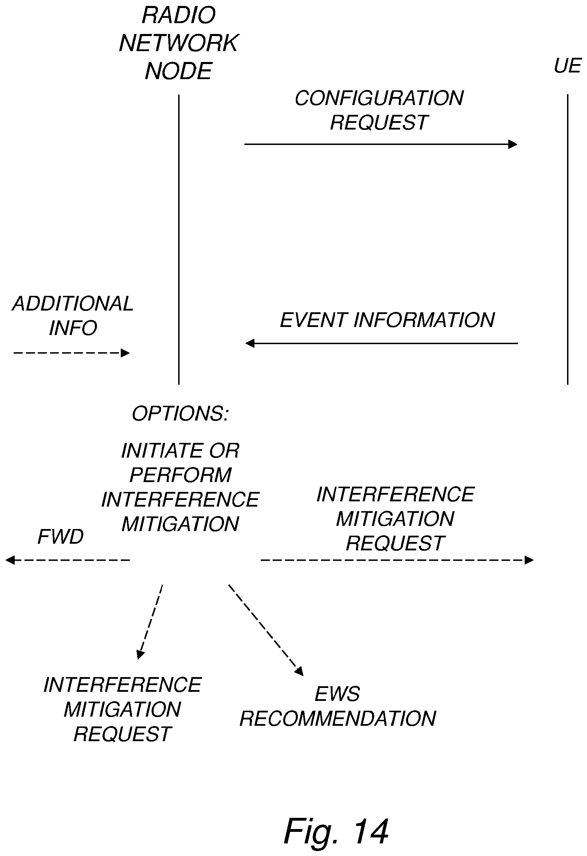

Figure 14 is a schematic diagram illustrating an example of signaling and/or actions from the perspective of a radio network node.

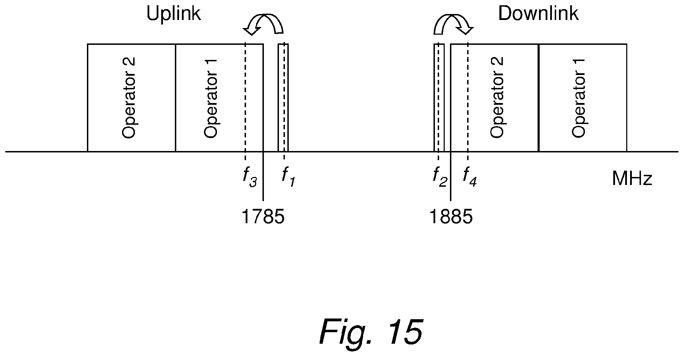

Figure 15 is a schematic diagram illustrating an example of EWS frequencies and mobile system frequencies in close vicinity.

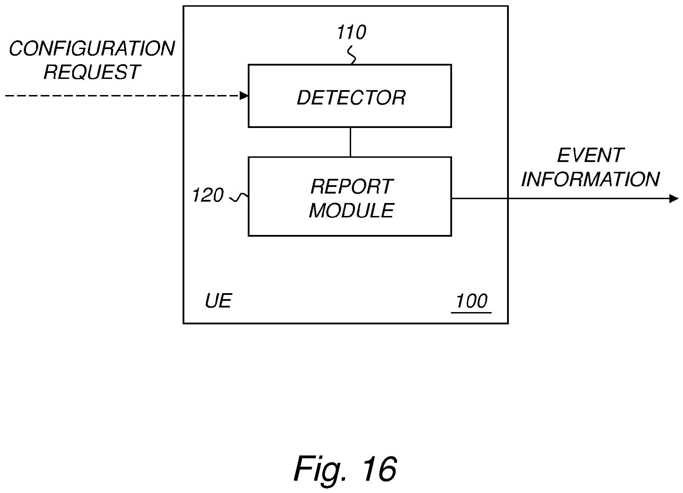

Figure 16 is a schematic diagram illustrating an example of a User Equipment, UE, operable to enable mitigation of interference between an External Wireless System, EWS, and a mobile communication system.

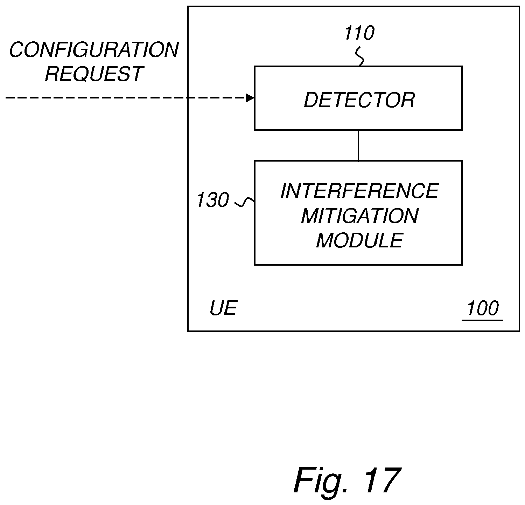

Figure 17 is a schematic diagram illustrating an example of a User Equipment, UE, operable to enable mitigation of interference between an External Wireless System, EWS, and a mobile communication system.

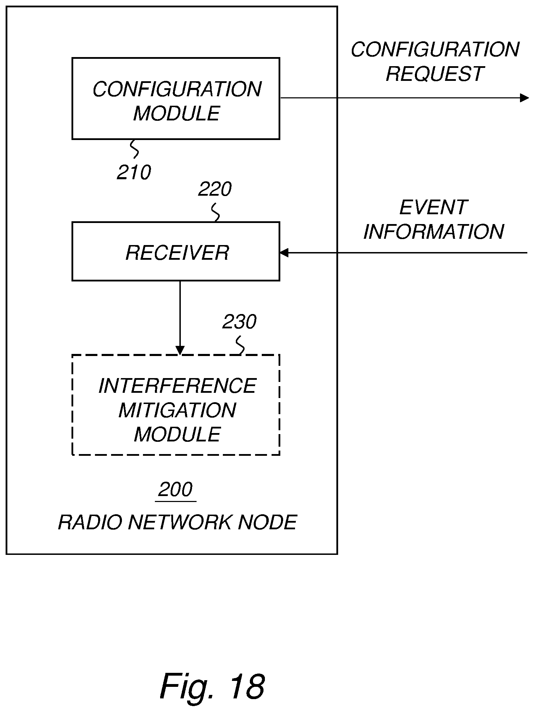

Figure 18 is a schematic diagram illustrating an example of a radio network node operable to enable mitigation of interference between an External Wireless System, EWS, and a mobile communication system.

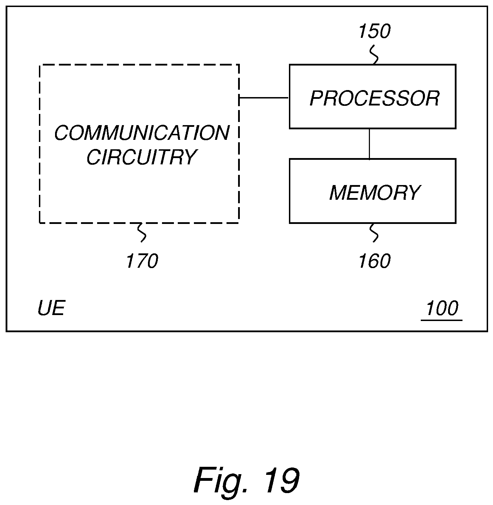

Figure 19 is a schematic diagram illustrating an example of a User Equipment, UE, operable to enable mitigation of interference between an External Wireless System, EWS, and a mobile communication system.

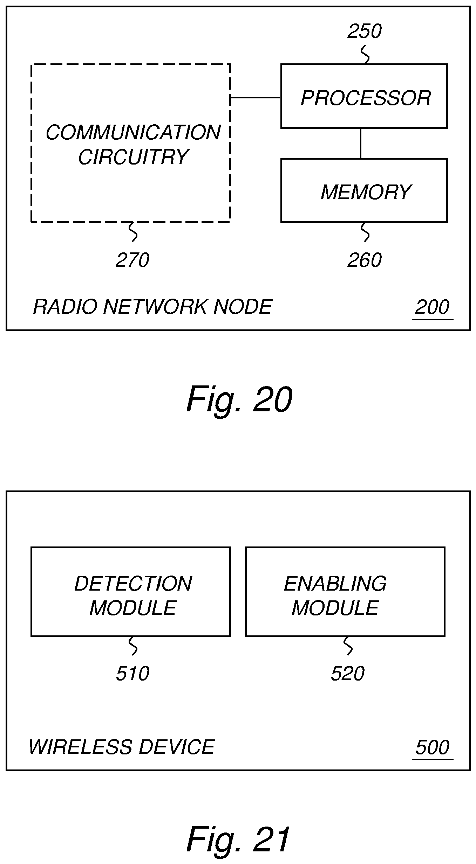

Figure 20 is a schematic diagram illustrating an example of a radio network node operable to enable mitigation of interference between an External Wireless System, EWS, and a mobile communication system.

Figure 21 is a schematic diagram illustrating an example of a wireless device operable to enable mitigation of interference between an External Wireless System, EWS, and a mobile communication system.

Figure 22 is a schematic diagram illustrating an example of a system/network overview.

## DETAILED DESCRIPTION

Throughout the drawings, the same reference numbers are used for similar or corresponding elements.

As used herein, the terms "User Equipment" and "wireless device" may refer to a mobile phone, a cellular phone, a Personal Digital Assistant, PDA, equipped with radio communication capabilities, a smart phone, a laptop or Personal Computer, PC, equipped with an internal or external mobile broadband modem, a tablet PC with radio communication capabilities, a target device, a device to device UE, a machine type UE or UE capable of machine to machine communication, iPAD, customer premises equipment, CPE, laptop embedded equipment, LEE, laptop mounted equipment, LME, USB dongle, a portable electronic radio communication device, a sensor device equipped with radio communication capabilities or the like. The term "UE" and the term "wireless device" should be interpreted as non-limiting terms comprising any type of wireless device communicating with a radio network node in a cellular or mobile communication system or any device equipped with radio circuitry for wireless communication according to any relevant standard for communication within a cellular or mobile communication system.

As used herein, the term "radio network node" may refer to base stations, network control nodes such as network controllers, radio network controllers, base station controllers, and the like. In particular, the term "base station" may encompass different types of radio base stations including standardized base stations such as Node Bs, or evolved Node Bs, eNBs, and also macro/micro/pico radio base stations, home base stations, also known as femto base stations, relay nodes, repeaters, radio access points, base transceiver stations, BTSs, and even radio control nodes controlling one or more Remote Radio Units, RRUs, or the like.

In some examples the more general term "network node" is used and it refers to any type of radio network node or any network node, which communicates with at least a radio network node. Examples of such a network node include any radio network node stated above, core network node such as a Mobile Switching Centre, MSC, Mobility Management Entity, MME, Operational and Maintenance, O&M, entity, Operational Support Systems, OSS, entity, Self-Organizing Network, SON, node, positioning node such as Serving Mobile Location Centre, SMLC, or Evolved SMLC, E-SMLC.

The term "EWS" refers to any External Wireless System other than a cellular or mobile communication systems causing interference to the latter. Examples of EWS are Programme Making and Special Event, PMSE, equipment such as wireless microphones, Wireless Local Area Networks, WLANs, wireless medical equipment, Radio Frequency IDentification devices, RFID, wireless musical instruments, satellite communication equipment, and so forth.

The term "mobile communication system" refers to any system or network for mobile communications, including cellular communication systems.

As previously indicated, there is a general demand for an efficient and/or flexible way of enabling mitigation of interference between an EWS system and a mobile communication system.

Figure 6 is a schematic flow diagram illustrating an example of a method performed by a UE for enabling mitigation of interference between an External Wireless System, EWS, and a mobile communication system.

In step S1, the UE is detecting an EWS event involving EWS operation interfering with the operation of the mobile communication system provided at least one interference condition is fulfilled. In this example, the interference condition(s) includes a first condition based on a frequency relation between a representation of an operating frequency of the EWS and a representation of a reference frequency. In step S2, the UE is enabling the mitigation of interference based on event information representing the EWS event.

This provides for an efficient and/or flexible way of enabling mitigation of interference between an EWS system and a mobile communication system on the UE side. In particular, mitigation of interference is only enabled or applied when necessary, e.g. when a representation of the operating frequency of the EWS and a representation of the reference frequency are related in a predefined way according to a predefined frequency relation. This effectively prevents unnecessary degradation of the performance of the mobile system and/or the EWS system, and ensures satisfactory system operation.

Satisfactory system performance typically means that users can operate their mobile services with no or minimal degradation. The proposed technology may also prevent the need for introducing guard band to protect mobile systems from EWS interference; this in turn prevents wastage of spectrum.

As an example, the first condition may be expressed by a pre-defined frequency relation relating a representation of the operating frequency of the EWS and a representation of the reference frequency, as will be exemplified later on. Anyway, the inventors have recognized the benefits of using a predefined frequency relation between the operating frequency of the EWS and a reference frequency for evaluating whether or not an EWS event should trigger interference mitigation.

By way of example, the reference frequency may be representative of the operating frequency of the mobile communication system. In this way, the frequency relation will relate the operating frequency of the EWS system and the operating frequency of the mobile system.

The UE may enable mitigation of the interference in many different ways. For example, the UE may report the event information to a radio network node, which in turn may initiate or perform the interference mitigation based on the event information, either by itself or by instructing or requesting the UE, another network node and/or the EWS system to take appropriate actions. Alternatively, the UE may itself initiate or perform the interference mitigation.

Figure 7 is a schematic flow diagram illustrating an example of a method performed by a UE for enabling mitigation of interference between an External Wireless System, EWS, and a mobile communication system according to a particular embodiment. In this particular example, the step S2 in which the UE is enabling the mitigation of interference comprises the step S2-1A of reporting the event information to a radio network node to enable the mitigation of interference.

Figure 8 is a schematic flow diagram illustrating an example of a method performed by a UE for enabling mitigation of interference between an External Wireless System, EWS, and a mobile communication system according to another particular embodiment. In the particular example of Figure 8, the step S2 in which the UE is enabling the mitigation of interference comprises the step S2-1B of the UE initiating or performing the mitigation of interference between the EWS and the mobile communication system at least partly based on the event information.

As an example, the UE receives a configuration request from the radio network node including configuration information to enable the UE to detect the EWS event provided the interference condition or conditions is/are fulfilled.

For example, the configuration information includes at least information about the frequency relation. This may be information partly or completely defining the frequency relation. As an example, part of the information about the frequency relation may optionally be preconfigured in the UE, whereas another part of the information about the frequency relation is transmitted from the radio network node to the UE.

Additional configuration information regarding the detection of the EWS event may optionally include information regarding time and/or location of the EWS event, as will be exemplified in more detail later on. The configuration information then typically defines values and/or intervals within which the time and/or location of the EWS event should lie.

In a particular example, the interference condition(s) may further include one or more of the following:

- a second condition that at least one of time and location of the EWS event matches predefined settings; and
- a third condition that at least one of transmit power of the EWS and radio emission characteristics of the EWS related to the EWS event matches predefined settings.

As will be understood by the skilled person the UE, the radio network node and/or another node in the radio or core network may perform relevant measurements and/or estimate or otherwise acquire information on parameters such as the EWS operating frequency, time and/or location of the EWS to allow detection of the EWS event. By way of example, the UE and the radio network node generally have knowledge of the relevant operating frequency of the mobile communication system for use as the reference frequency.

Once an EWS event has been detected, the UE may prepare the event information, and report this information to the radio network node or use it more or less directly in the UE to initiate or perform interference mitigation.

As an example, the event information includes at least one of: time, location and operating frequency of the EWS event. It may be advantageous to prepare as much event information as possible, but on the other hand, it may be beneficial to keep the amount of data to be transmitted to the radio network node at a reasonable or even low level, especially if the radio network node already has some knowledge of the time, location and/or operating frequency through the configuration request. For example, the radio network node may have sent configuration information instructing the UE to detect an EWS event under certain conditions including the frequency relation but optionally also time, location and/or other information. If the UE then reports, even if it is only by a simple flag, that it has indeed detected such an EWS event, then the radio network node can deduce event information through the configuration information.

As will be exemplified later on, the first condition may involve a general function g relating a representation of the operating frequency, $F_{EWS}$, of the EWS and a representation of the reference frequency, $F_R$. For example, the first condition will be considered fulfilled provided at least one of the following is valid:

$$\left| F_R - g(F_{EWS}, \alpha) \right| \leq \Delta f_R$$

$$\left| F_{EWS} - g^{-1}(F_R, \sigma) \right| \leq \Delta f_{EWS}$$

where $\alpha$ and $\sigma$ are respective optional parameters used to relate $F_R$ and $F_{EWS}$, and $\Delta f_R$ and $\Delta f_{Ews}$ are respective margins. This is an illustrative example of how it can be determined whether a representation of the operating frequency of the EWS and a representation of the reference frequency are related in a predefined way. More specific examples will be described later on.

Figure 9 is a schematic flow diagram illustrating an example of a method performed by a UE for enabling mitigation of interference between an External Wireless System, EWS, and a mobile communication system according to yet another particular embodiment. In this example, the step S1 in which the UE is detecting an EWS event involving EWS operation interfering with the operation of the mobile communication system includes the steps of identifying S1-1 an EWS event and checking, or evaluating, S1-2 whether the identified EWS event involves EWS operation complying with the interference condition(s).

For example, the step S1-1 of identifying an EWS event may be based on at least one of the following:

- detection of EWS operation of built-in EWS in the UE;
- detection of EWS operation based on interference profile; and
- detection of EWS operation based on cross-layer communication.

It should be understood that the EWS event may represent a present event involving EWS operation that is currently interfering with the operation of the mobile communication system, or a future event involving EWS operation expected to be interfering with the operation of the mobile communication system.

In the latter case, the invention provides a way to assess in advance the expected impact of the interference between the EWS system and the mobile or cellular system, e.g. from the EWS system towards the mobile or cellular network nodes and/or UE or from the mobile or cellular system towards the EWS system.

Optionally, the UE may report its capability associated with EWS interference mitigation to a network node in the mobile communication system to enable the network node to perform at least one operational task related to EWS interference mitigation.

The proposed technology is generally applicable for enabling mitigation of interference between any EWS system and any mobile system. For example, it may be desirable to protect a victim mobile system from any aggressor EWS system in general and from the PMSE operation in band 3/III (1800 MHz range) in particular. It may also be desirable to protect the EWS system, being the victim system, from a mobile system, being the aggressor system.

For completeness, it should be understood that the EWS may optionally be an in-device EWS system integrated in the UE, and the UE may then mitigate interference between the EWS and the mobile communication system by changing the operation of the in-device EWS. However, in most cases, the EWS system is an outside-device EWS system.

Anyway, options for changing the operation of the in-device EWS include at least one of:

- turning off the in-device EWS;
- changing the operating frequency of the in-device EWS; and
- reducing output power of the in-device EWS.

Figure 10 is a schematic flow diagram illustrating an example of a method performed by a radio network node for enabling mitigation of interference between an External Wireless System, EWS, and a mobile communication system.

In step S11, the radio network node is configuring a User Equipment, UE, or other network node for detecting and reporting an EWS event involving EWS operation interfering with the operation of the mobile communication system provided at least one interference condition is fulfilled. The interference condition(s) includes a first condition based on a frequency relation between a representation of an operating frequency of the EWS and a representation of a reference frequency. In step S12, the radio network node is receiving event information representing the EWS event from the UE or the other network node to enable the mitigation of interference.

In this way, an efficient way of enabling mitigation of interference between an EWS system and a mobile communication system is provided on the network side, thereby maintaining satisfactory system performance.

As previously indicated, the first condition may optionally be expressed by a pre-defined frequency relation relating a representation of the operating frequency of the EWS and a representation of the reference frequency.

By way of example, the reference frequency may be representative of the operating frequency of the mobile communication system.

The radio network node may enable mitigation in many different ways. For example, the radio network node may initiate or perform the interference mitigation based on the event information, either by itself or by instructing or requesting the UE, another network node and/or the EWS system to take appropriate actions.

Figure 11 is a schematic flow diagram illustrating an example of a method performed by a radio network node for enabling mitigation of interference between an External Wireless System, EWS, and a mobile communication system. In this example, the step S11 in which the radio network node is configuring the UE comprises the step S11-1 of sending a configuration request to the UE or the other network node including configuration information to enable the UE or the other network node to detect and report the EWS event provided the interference condition(s) is/are fulfilled.

For example, the configuration information includes at least information about the frequency relation. This may be information partly or completely defining the frequency relation, as previously mentioned.

Additional configuration information regarding the detection of the EWS event may optionally include information regarding time and/or location of the EWS event, as will be exemplified in more detail later on. The configuration information then typically defines values and/or intervals within which the time and/or location of the EWS event should lie.

As an example, the event information includes at least one of: time, location and operating frequency of the EWS event. Optionally, additional information may be included in the event information, as will be exemplified later on.

As mentioned above, it is possible to define the first condition by means of a general function $g$ relating a representation of the operating frequency, $F_{EWS}$, of the EWS and a representation of the reference frequency, $F_R$. For example, the first condition may be considered as fulfilled provided at least one of the following is valid:

$$\left| F_R - g(F_{EWS}, \alpha) \right| \le \Delta f_R$$

$$\left| F_{EWS} - g^{-1}(F_R, \sigma) \right| \le \Delta f_{EWS}$$

where $\alpha$ and $\sigma$ are respective optional parameters used to relate $F_R$ and $F_{EWS}$, and $\Delta f_R$ and $\Delta f_{EWS}$ are respective margins.

In a particular example, the interference condition(s) may further include one or more of the following:

- a second condition that at least one of time and location of the EWS event matches predetermined settings; and
- a third condition that at least one of transmit power of the EWS and radio emission characteristics of the EWS related to the EWS event matches predetermined settings.

Figure 12 is a schematic flow diagram illustrating an example of a method performed by a radio network node for enabling mitigation of interference between an External Wireless System, EWS, and a mobile communication system. In this example, the method further comprises the step S13 in which the radio network node is initiating or performing the mitigation of interference between the EWS and the mobile communication system based on the event information.

By way of example, the step S13 in which the radio network node is initiating or performing the mitigation of interference may involve the radio network node providing a recommendation to the EWS to apply interference mitigation based on the event information.

For example, the recommendation may comprise one or more of the following:

- a recommendation to switch frequency channel of the EWS;
- a recommendation to reduce output power level of the EWS;

- a recommendation to turn off the EWS;
- a recommendation to change the operating frequency of the EWS;
- a recommendation to change the physical location of the EWS; and
- a recommendation to change the time period of operating the EWS.

As mentioned, the radio network node may enable interference mitigation in a wide variety of ways. For example, the step S13 in which the radio network node is initiating or performing the mitigation of interference may be based on at least one of the following:

- the radio network node configuring the UE to increase the UE transmit power on the uplink;
- the radio network node increasing its own transmit power on the downlink;
- the radio network node scheduling the UE with a robust transport format;
- the radio network node informing other radio network node(s) about the EWS operation to assist the other radio network node(s) in a handover decision;
- the radio network node only selectively admitting new UEs or only selectively admitting UEs performing cell change;
- the radio network node changing the carrier frequency of the UE in dependence on the event information; and
- the radio network node performing a cell change of the UE to another frequency or to another radio access technology based on knowledge of the operating frequency of the EWS and the operating frequencies of the UE and radio network node in the mobile communication system.

As previously mentioned, the EWS event may represent a present event involving EWS operation that is currently interfering with the operation of the mobile communication system, or a future event involving EWS operation expected to be interfering with the operation of the mobile communication system.

Optionally, the radio network node may acquire additional information on the EWS operation from another network node to be used in combination with the received event information from the UE or the other network node to support configuration of the interference mitigation.

Figure 13 is a schematic diagram illustrating an example of signaling and/or actions from the perspective of a UE according to an embodiment. By way of example, the UE receives a configuration request from a radio network node and/or is preconfigured with configuration information for detecting and reporting an EWS event. The UE may then detect such an EWS event using one or more interference conditions, at least one of which is based on a frequency relation between a representation of an operating frequency of the EWS and a representation of a reference frequency, such as an operating frequency of the mobile system, as described above. By way of example, the UE may then prepare event information representing the detected EWS event and report (Option A) the event information to the radio network node, or initiate or perform interference mitigation (Option B) at least partly based on the event information.

Figure 14 is a schematic diagram illustrating an example of signaling and/or actions from the perspective of a radio network node according to an embodiment. By way of example, the radio network node sends a configuration request to the UE or another network node including configuration information to enable the UE or the other network node to detect and report an EWS event as described above. The radio network node may then receive event information representing an EWS event detected by the UE or other network node.

The radio network node has several options. For example, the radio network node may initiate or perform interference mitigation based on the received event information. The radio network node may for example send an interference mitigation request to the UE, which then performs interference mitigation. Alternatively, the radio network node may forward at least part of the event information to another network node, which in turn may initiate or perform interference mitigation. Another option is to send a recommendation to the EWS system requesting the EWS system to perform suitable interference mitigation technique(s). Yet another option is to send an interference mitigation request to another network node asking that node to perform a suitable interference mitigation technique(s). It is also an alternative for the radio network node to simply forward at least part of the event information to another network node, which may then take suitable actions based on the forwarded event information.

In the following, the proposed technology will be described with reference to a plurality of non-limiting examples.

In a particular non-limiting example, as schematically illustrated in Figure 22, a radio network node, RNN, 200 such as base station or a radio network controller operating in a mobile or cellular communication system 400 serves at least one UE 100.

The radio network node 200 may also be directly or via another node in a core network, CN, 600 connected to an optional network node, NN, 500, which may also be located in the core network. The network node 500 typically has information or is capable of acquiring information about the operation of at least one EWS system 300, e.g. through messages sent by the subscribers. The network node 500 can for example be a server which manages or stores information about the operation of the EWS system 300. The network node 500 may be capable of communicating with the radio network node 200 using a backhaul link directly or via any suitable network node in the core network 600 such as a MME, O&M, OSS and/or SON node. For example, the network node 500 can be physically part of the MME but logically a separate entity comprising of memory and processing units.

*Radio Measurements*

*UE measurements*

By way of example, the radio measurements may be performed by the UE on the serving as well as on neighbor cells over some known reference symbols or pilot sequences. The measurements may be done on cells on an intra-frequency carrier, inter-frequency carrier(s) as well as on inter-RAT carriers(s) depending upon the UE capability whether it supports that RAT. The inter-frequency and inter-RAT measurements are typically done in periodic measurement gaps.

Some measurements may also require the UE to measure the signals transmitted by the UE in the uplink. The measurements may be done by the UE in RRC connected state or in CELL_DCH state in HSPA as well as in low activity RRC states; e.g. idle state, CELL_FACH state in HSPA, URA_PCH and CELL_PCH states in HSPA and so forth.

In multi-carrier or Carrier Aggregation, CA, scenarios, the UE may perform the measurements on the cells on the Primary Component Carrier, PCC, as well as on the cells on one or more Secondary Component Carriers, SCCs.

The measurements may be done for various purposes. Some example measurement purposes are: mobility, positioning, Self Organizing Network, SON, Minimization of Drive Tests, MDT, Operation and Maintenance, O&M, network planning and optimization and so forth.

The measurements are typically performed over longer time duration in the order of few 100 ms to few seconds. Examples of UE measurements in LTE are signal strength such as Reference Symbol Received Power, RSRP, and signal quality such as Reference Symbol Received Quality, RSRQ.

*Radio network node radio measurements*

In order to support different functions such as mobility, positioning, link adaptation, scheduling, load balancing, admission control, interference management, interference mitigation and so forth, the radio network node may also perform radio measurements on signals transmitted and/or received by the radio network node. Examples of such measurements are Signal-to-Noise Ratio, SNR, Signal-to-Interference-and-Noise-Ratio, SINR, Received Interference Power, RIP, Block Error Rate, BLER, propagation delay between UE and the radio network node, transmit carrier power, transmit power of specific signals, and positioning measurements and so forth.

Positioning

The position of the UE or target device may for example be determined by using one or more positioning measurements, which can be performed by a suitable measuring node or the target device.

In LTE, for example, the positioning node, aka E-SMLC or location server, configures the UE or target device, eNode B or a radio node dedicated for positioning measurements such as a Location Measurement Unit, LMU, to perform one or more positioning measurements depending upon the positioning method. In LTE the positioning node communicates with UE using the LTE Positioning Protocol, LPP and with eNode B using LTE Positioning Protocol annex, LPPa.

A few examples of well-known positioning methods for determining the UE position used in mobile or cellular systems such as LTE are summarized below:

- Satellite based methods
- Observed Time Difference Of Arrival, OTDOA, methods
- Uplink Time Difference Of Arrival, UTDOA, methods
- Enhanced Cell ID, E-CID, methods
- Hybrid methods

The radio network node 200 may decide to acquire information regarding the operation of the EWS in the vicinity of its operation e.g. within the mobile or cellular coverage of the radio network node. As an example, the radio network node 200 may configure one or plurality of UE 100 and/or the network node 500 with a certain set of parameters, which enables them to detect and report information about an event involving EWS operation. By way of example, the set of parameters comprises:

- A function or relation relating EWS operating frequency ($F_{EWS}$) and a reference frequency ($F_R$), or a configurable parameter of such a function if the function is preconfigured in the UE.
- Location of the EWS operation (optional)

- Time of the EWS operation (optional)

An additional set of parameters may further comprise one or more of the following:

- Transmit power of the EWS system
- Radio emission characteristics

In one exemplary embodiment the radio network node 200 specifies values or ranges of the parameters. In this case, the UE 100 is requested to only detect and report an event where EWS operation meets the above specified conditions.

In another exemplary embodiment the radio network node 200 specifies values of only limited set of parameters (e.g. related to the frequency relation) and requests the UE 100 to detect any EWS operation that fulfils the specified frequency relation and report event information representing the detected EWS event. As an example, this may include information representing the operating frequency of the EWS event, and optionally also the location and/or time of the detected EWS event. Depending on the knowledge of the values or ranges that the radio network node 200 already has when configuring the UE 100, the event information to be reported from the UE to the radio network node 200 may be reduced to a minimum, as previously indicated. Many different variations exist. The radio network node 200 may optionally request the UE to report values of additional parameters such as transmit power and/or radio emission characteristics.

Examples of the above parameters are described in the following:

*Location of EWS operation*

If the event where EWS would be operating will take place in the vicinity of the mobile or cellular operation e.g. close to the radio base station then the impact of the aggressor EWS signal transmissions on the receiver of the victim mobile or cellular system is more severe. Therefore the relative position of the mobile or cellular system with respect to the EWS operation may be important for the radio network node 200 to know before applying the mitigation technique and/or type of mitigation technique.

The radio network node 200 can for example specify specific location or range of locations forming a coverage area in which the UE 100 is expected to detect the event with EWS operation. The coverage area for example can cover the region with multiple base stations and/or where there is large number of mobile or cellular UEs.

The location of the event where EWS is operating or expected to operate can be expressed in terms of one or more of the following:

- Geographical coordinates of specific location or range of coordinates forming an area e.g. latitude, longitude, height and so forth.
- Physical address such as street address.
- Well known places, e.g. a town hall, market place, park or garden and so forth.

The UE 100 and/or radio network node 200 can use existing positioning methods and/or pre-defined information to determine the location of the event.

*Time of EWS operation*

The event involving EWS operation may be in operation or it may occur at a future time. The radio network node 200 does not have to apply mitigation all the time, but for example only when EWS will operate.

As an example, the radio network node 200 may indicate to the UE 100 that it is required to detect and report any event involving EWS operation that would occur at the specified time. As described later, the radio network node 200 may optionally retrieve stored information from the network node 500 about EWS operation to enhance reliability of the EWS operation.

The radio network node 200 may alternatively indicate to the UE 100 to report the timing information of any detected event involving EWS operation.

The timing information may comprise one or more of the following:

- Starting time of the event, e.g. time with respect to a reference time such as Global Positioning System, GPS, time, Global Navigation Satellite System, GNSS, time, time with respect to a network indicated or configurable reference time or timestamp provided by the radio network node, time with respect to network time such as System Frame Number, SFN or a specific SFN value.
- Ending time of the event, e.g. time with respect to the same reference time as for the starting time.

- Duration or period of the event, e.g. total duration of the event.

*Examples of function relating EWS operating and reference frequencies*

A function relating the frequencies of the EWS operation and a reference frequency enables the UE and/or network node to report information about EWS operations which can potentially affect specific mobile or cellular operation in a particular region. This in turn reduces signaling overheads by avoiding unnecessary reports and also allows the radio network node to apply mitigation when appropriate, e.g. when mobile or cellular operation is adversely affected.

The function can be pre-defined in the standard or configurable by the radio network node 200. In case of a pre-defined function, the function and/or parameter value(s) used in the function can be configured at the UE 100 or network node 500.

If more than one function is pre-defined then the radio network node 200 may configure the identifier of the pre-defined function and/or the parameter value(s).

A number of non-limiting examples of functions are given below. In these exemplary functions the following parameters are used:

- $F_{EWS}$ is typically the center frequency of the EWS operation, which can be aggressor or victim with respect to the mobile or cellular system. The UE may be operating EWS at this frequency or it may operate its EWS at this frequency in future or it may detect EWS operation in another UE or node operating at this frequency.
- $F_{EWS}'$ is the calculated or estimated frequency for the victim or aggressor EWS system wherein the calculation or estimation is based on a frequency relation.
- $F_R$ is typically the center frequency of the potential victim or aggressor mobile or cellular system. The UE may be operating at this frequency or it may operate at this frequency in the future.
- $F_R'$ is the calculated or estimated frequency for the victim or aggressor mobile or cellular system wherein the calculation or estimation is based on a frequency relation.

Alternatively any of $F_{EWS}$, $F_R$, $F_{EWS}'$ and $F_R'$ can also be the lowest operating frequency or the highest frequency in bandwidths of their respective systems. More specifically $F_R$ and $F_{EWS}$ are the actual frequency of operation of the mobile or cellular system and EWS system respectively. This is illustrated by an example in Figure 15, which shows an example of EWS frequencies (f1, f2) and mobile or cellular system frequencies (f3, f4) in close vicinity.

An example of a general function relating the two frequencies can be expressed by (1):

$$F_R' = g(F_{EWS}, \alpha) \qquad (1)$$

where the parameter $\alpha$ is used to relate the two frequencies. The relationship can be linear or non-linear.

Another example of a function is expressed by (2):

$$F_R' = \beta * F_{EWS} \qquad (2)$$

where $\beta$ is a real number (positive or negative), which can be an integer or floating point. Typically it is an integer, which then relates one of the harmonics (e.g. 3rd or strongest harmonic) generated by the EWS system causing interference to the victim mobile or cellular system operating at the frequency ($F_R$).

Yet another example of a function is expressed by (3):

$$F_R' = a_1 + a_2 * F_{EWS} + a_3 * F^2_{EWS} + a_4 * F^3_{EWS} + \ldots + a_n * F^{n-1}_{EWS} \qquad (3)$$

where '$a_n$' can be a set of real and complex numbers (positive or negative), whose magnitude can be an integer or floating point. Typically it is an integer, which then relates harmonics or intermodulation products generated by the EWS system causing interference to the victim mobile or cellular system operating at the frequency ($F_R'$).

Yet another example of a function is expressed by (4):

$$\left| F_R - F_{EWS} \right| \leq \Delta f \qquad (4)$$

The function in (4) depicts whether the actual frequencies of operation of the EWS and victim mobile or cellular systems are within a certain range $\Delta f$. If they are within the range then the EWS system is expected to cause interference to the victim mobile or cellular systems otherwise the impact is negligible or non-existent.

The value for $F_R'$ calculated from equations (1) to (3) is typically compared with the actual value of the mobile or cellular system ($F_R$) to determine if they are within a range or not. The event is triggered when they are within certain margin. For example the event may only be triggered provided the magnitude of the difference between the real value for the center frequency of the potential victim mobile or cellular system ($F_R$) and the calculated value ($F_R'$) is within certain margin ($\Delta f_R$) according to (5A) and/or (5B):

$$\left| F_R - F_R' \right| \leq \Delta f_R \qquad (5A)$$

which can be equivalently expressed as:

$$\left| F_R - g(F_{EWS}, \alpha) \right| \leq \Delta f_R \qquad (5B)$$

where $\Delta f_R$ is typically between 1 to 5 MHz. As a special case it can also be zero.

Notice also that relations in (1) to (3) can also be expressed in an equivalent manner such that mobile or cellular operating frequency ($F_R$) is an independent variable and the EWS frequency is calculated or estimated from the mobile or cellular frequency. The corresponding examples of such reverse functions are expressed by (6) is (8):

$$F_{EWS}' = g^{-1}(F_R, \sigma) \qquad (6)$$

where the parameter $\sigma$ is used to relate the two frequencies. The relationship can be linear or non-linear.

Yet another example of a function expressed by (2) is (7):

$$F_{EWS}' = 1/\tau * F_R \qquad (7)$$

where $\tau$ is a real number (positive or negative), which can be an integer or floating point.

The value for $F_{EWS}'$ calculated from equations (6) and (7) is typically compared with the actual value of the mobile or cellular system ($F_{EWS}$) to determine if they are within a range or not. The event is triggered when they are within certain margin. For example the event may only be triggered provided the magnitude of the difference between the real value for the center frequency of the EWS operation ($F_{EWS}$) and the calculated value ($F_{EWS}'$) is within certain margin ($\Delta f_{EWS}$) according to (8A) and/or (8B):

$$\left| F_{EWS} - F_{EWS}' \right| \leq \Delta f_{EWS} \qquad (8A)$$

$$\left| F_{EWS} - g^{-1}(F_R, \sigma) \right| \leq \Delta f_{EWS}' \qquad (8B)$$

where $\Delta f_{EWS}$ is typically between 1 to 5 MHz. As a special case it can also be zero.

*Description of additional set of parameters*

*Transmit power of EWS system*

The transmit power of the aggressor EWS system may affect the victim mobile or cellular system. For example if the transmit power is higher than a threshold then the out of band emissions are also stronger. This in turn can degrade the receiver performance of the victim mobile or cellular system. This can even completely block the receiver of the victim mobile or cellular system depending upon the transmit power level of the EWS system and/or the receiver characteristics of the victim system.

The transmit power of the EWS system can for example be expressed in terms of one or more of the following:

- Nominal power such as the maximum output power or power class e.g. 250 mW (or 24 dBm). This is a static parameter.
  - Configured maximum output power, which can be less than the nominal output power. This is a semi-static parameter.
  - Measured output power according to a function over certain time period, e.g. average, xth percentile, peak output power, Peak-to-Average Power Ratio, PAPR, and so forth. This is a dynamic parameter as it value varies over time.

*Radio emission characteristics of EWS system*

The radio emission characteristics of the EWS system can for example be expressed in terms of one or more of the following:

- Out of band emission level e.g. -25 dBc in frequencies outside the operating frequency i.e. 25 dB below the EWS transmit power.
- Order of radio filter i.e. higher order means higher suppression of signals outside the operating frequency.

The radio emission characteristics of the EWS system may also affect the victim mobile or cellular system. For example an out of band emission level below a threshold (e.g. -25 dBc) causes no or negligible degradation of the receiver performance of the victim mobile or cellular system. On the other hand if the emission level is above a threshold (e.g. -20 dBc) then the receiver performance of the victim mobile or cellular system can be severely degraded.

*Examples of triggering conditions for sending requests*

In one exemplary embodiment the radio network node 200 sends a request to the UE 100 periodically or from time to time or configures them to report whenever they detect EWS operation affecting mobile or cellular systems.
However in order to avoid sending unnecessary requests to the UE 100, the radio network node 200 may optionally use one or more of the following triggering conditions based on which the request is sent:

- Based on historical data e.g. certain mobile or cellular frequencies are affected by EWS operation in certain location and/or at certain times;
- When quality of signal measured at the radio node (e.g. base station or UE) falls below certain threshold even if load (e.g. users, traffic, channel usage) in mobile or cellular system is below a threshold;
- When quality of a signal measured at the radio node (e.g. base station or UE) is below a threshold only for certain frequencies e.g. at the edge of a frequency band;

Method in UE of detecting and reporting information about EWS interference towards the mobile or cellular systems to radio network node
A method of detecting or determining an event where EWS system operates or is expected to operate, or detecting EWS interference towards the mobile or cellular system may be implemented on the UE side.
For example, the UE 100 may detect the EWS interference or related event either in response to a request received from the radio network node 200 as previously described or the UE may initiate such detection proactively, i.e. autonomously even without receiving a request.
In both cases, upon detection of the event or EWS operation the UE 100 reports the results to the radio network node 200.

*Detection of EWS operation*

The UE 100 may detect the EWS operation or may initially detect an event where EWS operates or is expected to operate by using one or more of the following mechanisms.

- Detection of EWS operation of inbuilt EWS in UE.
- Detection of EWS operation based on interference profile.
- Detection of EWS operation based on cross layer communication.
- Combined mechanism.

*Detection of EWS operation of integrated EWS in UE*

In this example, the UE 100 detects whether any one of the integrated EWS (i.e. built into the UE) is operating or expected to operate. If any such system is operating then the UE checks if the EWS operation matches with the parameter(s) sent by the radio network node 200 in a configuration request, or matches with preconfigured parameter(s).

For example, if the location of the UE and the frequency relations match then the UE 100 may send the EWS related information to the radio network node 200. A device to device, D2D, capable UE 100 may also send the information to another D2D capable UE, which in turn can send this to the radio network node.

The UE 100 may also proactively decide to send the information of the EWS information to the radio network node 200 provided certain conditions are met. For example:

- If EWS operating frequency and the serving carrier frequency of the UE are related by a relation as previously described.
- If EWS operating frequency and any non-serving carrier frequency of UE used in the area UE operates are related by a relation as previously described.
- If EWS operating frequency and a carrier frequency or any band being used or expected to be used in area where the UE operates are related by a relation as previously described.

*Detection of EWS operation based on interference profile*

In this example, the UE upon receiving a request or proactively tunes its own receiver to detect the signals received from EWS which can be standalone or integrated into another UE in an area. For example the interference profiles of interference caused by different EWS systems can bear certain characteristics and such information can be stored in the UE. The UE upon detection of the EWS operation based on an interference profile may then further check if the EWS frequency and the mobile or cellular frequency, e.g. indicated, serving, non-serving carriers, are related by a function as previously described. If a match is found then the UE may send the results to the radio network node.

*Detection of EWS operation based on cross layer communication*

In this example, the UE reads higher layer protocol information, e.g. sent by the subscriber to the network about the EWS operation. As will be described in detail later on subscribers can send messages to the network node 500 via the mobile or cellular network about the possible EWS operation, event information and so forth, e.g. as part of an event registration. The UE by using cross layer communication may read the higher layer messages such as text, email, IP packets and so forth and inspect the contents. If the information is pertinent to the radio network node 200, which has sent the request the UE 100 then it may extract the information and report the results related to EWS operation to the radio network node 200 using for example the RRC protocol. Otherwise the UE 100 may discard this information.

Even without an explicit request from the radio network node 200, the UE 100 may even proactively send the information acquired via cross layer communication to the radio network node provided the EWS operating parameters (e.g. frequency) match with the serving or non-serving mobile or cellular frequencies used in the area by a relation as previously described.

*Combined mechanism*

In the combined method, any combination of the above methods can be used by the UE for detection of EWS operation. The combined method may improve the accuracy of the detection and also enable the UE to obtain more comprehensive information about the event.

For example the UE can initially use the method based on cross layer communication to detect the possible EWS operation at a certain time, location and frequency relation. Then at the determined time and location the UE may use the method based on the interference profile to further confirm or more accurately determine the impact on mobile or cellular operation. If the EWS operation is detected by two or more methods then the UE sends the results to the radio network node.

*Reporting of information about the EWS operation*

The UE upon detecting EWS operation reports the results including contents of one or more parameters such as time, location, transmit power, radio emission characteristics, frequency information related to the EWS to the radio network node.

The UE may also send additional optional information to the radio network node:

- For example the UE may indicate the type of method(s) used for determining the EWS interference or EWS operation.

- In another example, the UE may indicate the reliability level of the results and/or method(s) used for determining the EWS interference or EWS operation.

In an alternative embodiment, the radio node may optionally acquire further information from the network node 500, which may maintain an optional database 550 including information related to different types of EWS operation in the area. In this example, by combining UE reported information and directly obtained information from the network node 500, the radio network node 200 gets more comprehensive information about the EWS information. It could also be envisaged that the radio network node 200 acquires the information when it receives information about EWS operation from the UE 100, i.e. the procedure is triggered by the UE report.

*Contents of database containing EWS operation*

The optional database 550 maintained or accessible by the network node 500 may include multi-dimensional information for every EWS operation or event where EWS is scheduled or expected to operate. The database for a large area, e.g. a city, district or locality, can be stored in association with the network node 500. This means that very large number of radio network nodes 200 can access the network node 500 for configuring for acquiring EWS related information.

Examples of information in the database 550 comprises at least one of:

- Location where the event takes place e.g. locality, geographical coordinates and so forth.
- Time when the event is scheduled, e.g. event starting time, event ending time, and event duration.
- Information about the carrier frequency of EWS operation.

The carrier frequency information may comprise one or more of the following:

- Absolute frequency, e.g. in MHz.
- Absolute frequency or channel number, e.g. Absolute Radio Frequency Channel Number, ARFCN.
- Frequency range or channel number range, e.g. between minimum and maximum frequencies.
- Bandwidth of each or plurality of EWS operating channels.
- Pre-defined frequency band indicator or number of EWS frequencies.

The multi-dimensional information may further comprise an additional set of information corresponding to the additional set of parameters previously described:

- Information about transmit power of EWS system.
- Information about radio emission characteristics of EWS system.

*Example of mechanism for building the database*

For example, the multi-dimensional database can be built by the network node 500 based on information acquired by means of at least one of:

- Acquisition via mobile or cellular network.
- Pre-defined or stored information.

Acquisition via mobile or cellular network:

In this case, the organizers of the event can send a message, e.g. a text message, voice message, email and so forth to the mobile operator via the mobile phone. The message contains a priori information about the event involving EWS operation, which may adversely affect the mobile services, and can be used by the operators in that area to take appropriate measures for prevention of any disruption or service degradation. The acquired information can be received at the radio network node 200 or in any node in the core network 600. However the acquisition of such event information requires at least some level of cooperation between mobile operators and organizers of an event involving EWS operation or between mobile operators and any third party working on behalf of the event organizers. Such cooperation leads to win-win situation for both parties since event organizers also do not want to lose participants due to the possible disruption or poor coverage of mobile operation during the event. For example the operators and the organizers of an event involving EWS operation can reach an agreement requiring the organizers to keep the operators aware of the event schedules. For example the organizer or the third party involved may send the event information to one or more operators in the area via a message such as SMS or MMS, or via an application program. For example, in the text message or in the application program the subscriber can provide detailed information of the event including, location (e.g. address, name of well-known place, city hall etc.), type of event, type of EWS devices (e.g. micro-phone), frequency information (e.g. frequency band of micro-phone etc.) to be used, time, date, duration, recurrent days if any (e.g. every Saturday) and so forth to the network of the concerned operator(s). As stated earlier such network node 500 may be located in the core network 600, e.g. as a separate node or part of one or more existing nodes like a core network node or part of one or ore other nodes such as an OSS and O&M node.

In a particular example, the information is directly received at a core network node in the core network 600, e.g. via text message, email, SMS, MMS and so forth. The core network node then stores the information in the database 550 in association with the network node NN 500 via an internal interface or a standardized interface depending upon the location of the network node within the core network 600.

Pre-defined information:

In this case the information to assist the building up of the database 550 can be stored in the network node NN 500 by the virtue of an application program. However the details such as time of operation, location of operation, brand name of EWS system and so forth may still have to be fed manually by the help of an application program. When the application receives new input then it updates the network node 500, which in turn updates the associated database 550.

*Mechanism of reporting information of EWS operation to radio network node*

By way of example, the network node NN 500 can then match the received information from the radio network node 200 with that in its multi-dimensional database 550 to determine if there is one or plurality of events involving one or plurality of EWS operations that could cause interference towards the mobile or cellular systems. If a match is found, then the network node 500 provides the requested information such as one or more of time, location, frequency information, transmit power, emission characteristics of the EWS operation to the requesting radio network node 200.

For example, the network node 500 may send the information back to the radio network node 200 directly via a standardized protocol, e.g. over the S1 interface in LTE. Alternatively it can send the information to a suitable network node in the core network 600, which in turn can further send it to the relevant radio network node 200. For example the network node 500 can be part of any of OSS, O&M, SON or MME or similar nodes which are directly connected to the radio network nodes.

The network node 500 may send the information periodically, only once or few times triggered by the request or even proactively to the relevant mobile or cellular network nodes. The proactive reporting herein means without receiving a request and can be triggered for example when the network node 500 detects new events involving EWS operation in an area and suspects that they may affect the mobile or cellular operation in that area, e.g. frequencies of the two systems are close or have some predefined relation.

*Examples of mitigation of interference*

The radio network node 200 may apply one or more interference mitigation techniques to eliminate or reduce the effect of the detected EWS interference. Interference mitigation may also be applied by the UE 100, especially when the EWS is integrated with the UE, i.e. an in-device EWS. This may be for example an integrated microphone in the UE.

The UE and/or radio network node may apply the interference mitigation techniques only when they reliably, by using a condition based on the described frequency relation, determine that the EWS operates or is expected to operate and cause interference to a mobile or cellular system, or the other way around.

Interference mitigation schemes can be grouped into the following two main categories:

- Intrinsic interference mitigation techniques
- Extrinsic interference mitigation techniques
- Combined interference mitigation techniques

*Examples of intrinsic interference mitigation techniques*

An intrinsic interference mitigation technique may be applied to the victim mobile or cellular system to avoid or minimize the effect of the aggressor EWS interference on the UE and/or radio network node. The radio network node can for example apply one or more interference mitigation techniques to protect and improve the signal reception quality at the UE and/or radio network node from the interference caused by a EWS system during the event when the EWS is operational.

*Examples of intrinsic mitigation techniques applied by the radio network node*

The radio network node may apply one or more of the following intrinsic interference mitigation techniques to reduce or minimize the effect of EWS interference on mobile or cellular operation:

1. In one example the network may configure the UE to increase the transmit power above a threshold (e.g. at least 0 dBm) to facilitate the reception of UE transmitted signal at the radio network node. This technique may be applied especially when the serving radio network node is the victim receiving strong interference from the aggressor EWS system.

2. In another example the network may increase the downlink transmit power above a threshold (e.g. at least 3 dBm per UE) to facilitate the reception of DL signal transmitted to the UE. This technique may be applied especially when the UE is the victim receiving strong interference from the aggressor EWS system.

3. In yet another example the network may schedule the UE with a more robust transport format for UL and/or DL transmissions. A transport format is characterized by a modulation and coding scheme, MCS, transport block or data block size, coding rate etc. A signal transmitted by the radio transmitter using a robust transport format can be more easily decoded by the radio receiver. An example of robust transport format comprises of MCS with Quadrature Phase Shift Keying, QPSK, and code rate of 1/3. This technique may be applied in UL when the serving radio network node is the victim and in the DL when the UE is the victim receiving interference from the aggressor EWS system.

4. In yet another example when the network knows the relation between the frequencies of the victim mobile or cellular system (i.e. UE and/or radio network node) receiver and the EWS radio transmitter, the network may perform a cell change of the UE to another frequency or to another Radio Access Technology, RAT, (e.g. inter-frequency or Inter-RAT handover). For example the network may change the carrier frequency of the UE(s) which is/are closest to the frequencies of the EWS system. In another specific example the network may move the UE operating in frequencies adjacent to the duplex gap of this band to either another frequency far from the duplex gap or to frequencies in another frequency band.

5. In yet another example the network may perform 'PCell' change of the UE operating in multi-carrier to another carrier frequency far from the frequency of the EWS system. The aim is to protect the PCell which contains the vital control and data information transmitted between the network and the UE. The new frequency of the new PCell can be in the old frequency band or in new frequency band.

6. In yet another example the network node which is aware of the impact of EWS interference on mobile or cellular system informs other network node(s) about the adverse impact of the said EWS interference. The other network node(s) can be another radio network node such as a BS, eNode B, RNC, BSC, relay and so on or it can be any other type of network node such as a positioning node, O&M, SON, OSS node and so on. For example an eNode B may signal this information to neighbouring eNode Bs over the X2 interface. The information may also include information such as at least one of the time period, location, type of EWS system, severity level of the EWS interference, UL and/or DL directions of affected EWS interference, affected frequencies, affected bands, RATs and so forth. The neighbouring eNode Bs may then use the received information when performing cell change of the UE especially over the indicated time and/or location. For example the serving eNode B may decide not perform handover to the eNode B, which has indicated the EWS interference problem. In yet another example the serving eNode B may decide not to perform handover to a frequency, RAT or band which is affected by EWS interference as indicated by the neighbouring eNode B.

7. In example 6 above, if the receiving network node is the positioning node such as the E-SMLC node then it may take the received information into account when configuring a radio node or a UE for performing positioning measurements. The positioning node may also receive the information from the UE, e.g. over LPP. For example, if the indicated EWS interference is severe then the positioning node may select a carrier frequency for positioning measurements far from that of the EWS to avoid degradation of positioning measurements. In another example the positioning node when using OTDOA positioning method may exclude cells, which are likely to be affected by EWS interference, from the assistance data sent to the UE to facilitate OTDOA Reference Signal Time Difference, RSTD, measurements. In yet another example the positioning node may select a positioning method which is least affected by the EWS interference. For example the positioning node may select UTDOA method or E-CID eNode B measurements if the EWS interference is more severe in the DL and less severe in the UL.

8. In yet another example the network node which is aware of the impact of EWS interference may also decide to only selectively admit new UEs or UEs performing cell change. For example the target radio network node (e.g. eNode B) may reject a handover request sent by the neighbouring eNode B in case the target eNode B has detected severe EWS interference. The target eNode B may also indicate the reason of the rejection of admitting the UE e.g. due to high interference caused by EWS system and may last at least until certain time. In another example the radio network node may only admit UEs associated with a criticality condition e.g. emergency call, high priority session such as speech etc.

*Examples of intrinsic mitigation techniques applied by the UE*

The UE may apply one or more intrinsic mitigation techniques in response to the detection of the EWS operation. Depending upon the mitigation technique the UE may apply it autonomously or when configured by the network node as elaborated with the following examples:

In a particular example, to protect the UE, the UE may autonomously or based on request received from the radio network node decide to use an enhanced receiver for receiving radio signals (e.g. reference signals, physical channels etc) from the radio network node at least during the time when the downlink reception is affected by the EWS interference. The network may in particular provide the geographical coordinates or area information where the UE is required to use the enhanced receiver. The UE may therefore determine its location and may use the enhanced receiver when it is in the zone being affected by the EWS interference. The enhanced receiver is capable of more effectively mitigate, reduce or eliminate interference caused by the EWS system. In this way the UE can more easily receive and decode the mobile or cellular signals in the affected area and during the affected time.

In another example, to protect the EWS, the UE may autonomously reduce its transmitted power down to a certain threshold level (e.g. down to 6 dBm) in case the uplink signal reception quality at the UE's serving radio network node is degraded due to the EWS interference. The power threshold can be pre-defined, configured by the network node or decided by the UE. The UE may also inform the network that it has lowered its output power limit to certain level in order to facilitate the reception of its UL transmitted signal at the radio network node.

*Examples of extrinsic mitigation techniques*

An extrinsic interference mitigation technique may be indirectly applied by the aggressor EWS system based on a recommendation received from the victim mobile or cellular system to avoid or minimize the harmful effect of the EWS interference on the mobile or cellular system. The extrinsic technique can be applied by both the UE and the network node depending upon EWS system and its configuration as described below:

*Examples of extrinsic mitigation techniques applied by the network node*

In this example, the network node may provide a recommendation (e.g. in terms of an alert message, email, Twitter etc.) to the UE of the event organizer or of a third party managing the event. It is assumed that the organizer has registered with the operator or has provided its credentials and event information prior to the event. The message which may comprise SMS, MMS and so on includes one or more recommended actions related to the EWS interference management. It is up to the organizer to follow one or more recommendations provided by the operators in the area where EWS is operating. The recommendation actions may be provided just prior to the event and can be updated depending upon the mobile or cellular system load and EWS interference. The EWS interference is mitigated or reduced towards the mobile or cellular system by enforcing restricted operation of the EWS system in accordance with the recommended action provided by the operator via alert messages to the organizer of the event.

Examples of recommended actions include:

1. In one example, a message such as SMS may comprise a simple alert message warning the organizer that certain EWS system (e.g. micro-phone based EWS) is causing disruption to mobile coverage/services at a certain location. In response, the organizer may switch frequency channel, reduce power/intensity level of the EWS system or may even decide to turn off the EWS system and so on.

2. In another example it may be recommended that the current frequency of the EWS operation is changed. For example the network may send an SMS requesting to change the current frequency channel to another frequency channel which has sufficient guard space with respect to the frequency of the mobile or cellular operation. The new frequency channel may belong to the same band of the existing band (e.g. 1800 MHz) or to another recommended band (e.g. 700 MHz) where the EWS can operate. The organizer may decide to switch EWS current channel to one or the recommended channels or to another channel.

3. In yet another example the maximum intensity level with which the EWS system should operate may be recommended, e.g. maximum output power, maximum discrete level such as up to $5^{th}$ out of $10^{th}$. In response, the organizer may reduce the intensity/volume and so forth, which will lead to reduction of output power lowering EWS interference towards the victim mobile or cellular system.

4. In yet another example the alert message may recommend the organizer to completely turn off the EWS system or certain type of EWS system in an area. For example, such a message may be sent owing to an emergency situation, an excessive number of high priority or emergency calls and so forth.

5. In yet another example if the EWS interference is reduced (e.g. if organizer has taken an action) then the network may also send an alert message that the EWS is no more disrupting the service and therefore current EWS settings should be maintained.

6. In any of the examples 1-4 above the alert message may also contain detailed information about the location or place where actions apply e.g. geographical coordinates, name of the location, area, zone, well known building and so on where one or more actions are recommended to be applied. The alert message may also contain location information or names of places where the EWS system can operate without restriction or with limited restriction (e.g. only by lowering power). The information regarding the location or places where, "restricted access", "limited or partly restricted access" and "unrestricted access" can also be displayed on the screen or map on the UE of the organizer. This information can be used by the organizer to move the EWS system to a location e.g. in the conference room or assembly hall, where there is no or limited restriction.

*Examples of extrinsic mitigation techniques applied by the UE*

In this particular scenario, it is assumed that the EWS system is integrated with the UE, i.e. an in-device EWS system. By way of example, the UE with an integrated EWS may apply one or more extrinsic mitigation techniques either autonomously or based on network assistance (e.g. when a request is received from the network).

Examples of UE autonomous method(s):

In case of UE autonomous mechanism, the UE may apply one or more of the following example solutions:

1. Turn off the EWS system completely.
2. Change the frequency channel of EWS system to another frequency channel in the same or a different band; the new frequency channel is far from the frequency used by the UE for mobile or cellular communication.
3. Reduce maximum output power of the EWS system causing interference.
4. UE may apply any of the above actions over certain time period and/or in certain location or area where EWS interference is more severe.
5. If the impact of the EWS interference on mobile or cellular operation is reduced after certain time and/or when UE moves to a new location then the UE may revert to the previous EWS configurations e.g. turn on the EWS if it was previously turned off.

Examples of network assisted method(s):

In case of network control mechanism, the network node serving the UE having an integrated EWS system configures the UE to apply one or more actions, similar to those previously described. The configuration can be done using higher layer signaling protocol, e.g. by means of the RRC protocol. The UE upon receiving a message, may then apply one or more actions, e.g. turning off the EWS system, changing EWS operating frequency channel, and/or reducing power of EWS system and so forth.

The autonomous or network assisted actions applied by the UE may be transparent to the subscriber or alternatively the UE may also display this on the screen or even inform the subscriber about the applied actions in the form of text messages, email, Twitter etc. The UE may also request the subscriber by displaying a question on the screen whether to apply a particular action or not. In this case the UE may apply the action if accepted by the subscriber e.g. by pressing a specific key, selecting an appropriate option etc.

*Examples of combined interference mitigation techniques*

The network may also apply any combination of intrinsic and extrinsic interference mitigation techniques described above. Similarly the UE may also apply any combination of the relevant intrinsic and extrinsic interference mitigation techniques disclosed above. The combined mechanism may be used especially when the EWS interference is severe towards the mobile or cellular systems and/or when there is uncertainty regarding the enforcement or application of the extrinsic mitigation scheme.

The proposed technology thus enables the relevant network node(s) and/or UE to apply one or more interference mitigation techniques to ensure mobile or cellular operation continues even under EWS operation.

When effective interference mitigation is applied, there is normally no need for the UE to meet stringent radio requirements or for the radio nodes to meet any additional radio requirements (e.g. BEM) when the mobile or cellular system coexists with the EWS system.

*Examples of criteria for selecting between different interference mitigation methods*

The network and/or UE (for UE autonomous actions) may use one or more criteria to select one or more most appropriate interference mitigation actions. The criteria are also used for selecting between intrinsic and extrinsic mitigation techniques and also the most appropriate type of intrinsic or extrinsic actions.

Examples of criteria are:

- Radio characteristics of EWS system: For example if the EWS system is capable of operating on different channels in the same band and/or in different bands then the network or UE may apply an extrinsic interference mitigation technique.
- Awareness about radio characteristics of EWS system: In case network does not have sufficient information about EWS radio characteristics (e.g. supported bands, maximum power etc) then the network or UE may decide to apply only one or more intrinsic interference mitigation techniques.
- Severity level of EWS interference: If the detected interference level is very severe then the network or UE may decide to apply both intrinsic and extrinsic interference mitigation techniques to more effectively protect the victim mobile or cellular system from the aggressor EWS system.
- UE capability of handling EWS interference: If the network is aware of UE capability of handling EWS interference (e.g. enhanced receiver to mitigate interference) then the network may at least recommend UE to apply an intrinsic mitigation scheme e.g. use enhanced receiver during the recommended time in certain locations. Since UE knows its receiver capability so it may apply intrinsic scheme if it has an enhanced receiver which can be used to mitigate EWS interference.
- Network node capability of handling EWS interference: If the network is sufficiently capable of handling and mitigating the EWS interference then the network may apply at least one or more intrinsic mitigation techniques. For example if it can perform smart power control in DL and/or UL, inter-frequency cell change etc, then it has more flexibility in terms of applying one or more suitable intrinsic mitigation schemes.
- Radio operational impact: When selecting between different mitigation schemes, the network may also assess the complexity of performing intrinsic and extrinsic mitigation techniques in terms of signaling overheads, level of reconfiguration of network and/or UE, response time of applied action, effectiveness of mitigating the interference etc. For example if intrinsic methods involve large signaling overheads then the network may decide to primarily rely on extrinsic techniques but it may also use one or more simplified intrinsic actions.
- Impact on mobile or cellular system performance: Some of the intrinsic techniques may degrade the user and system performance (e.g. lower bit rate) due to reduction in transmit power, use of low bit rate transport format etc. If the intrinsic techniques lead to significant degradation in system performance then the network may decide to use either only extrinsic techniques and/or only one or more selected intrinsic techniques which cause less degradation of system performance.

*Examples of UE of reporting its capability associated with EWS interference handling*

Contents of capability information

By way of example, the UE may optionally report its capability to the relevant network node such as eNode B, RNC, BSC, BS, relay, positioning node, core network node and so forth indicating that it is capable of detecting EWS interference and mitigating EWS interference provided it has pre-defined or a priori information about the event involving EWS operation. The UE may also signal additional optional information as part of the capability. The additional optional information may comprise one or more of the following:

- Type of EWS interference mitigation scheme that the UE can apply.
- Indication whether it can autonomously acquire event information, from the network or by both means.

- Indication whether it can detect and apply mitigation for particular type of EWS system, e.g. microphone.

Capability reporting mechanisms

The UE may send the above mentioned capability information to the network node in any of the following ways:

- Proactive reporting without receiving any explicit request from the network node, e.g. serving or any target network node.
- Reporting upon receiving any explicit request from the network node, e.g. serving or any target network node.
- The explicit request can be sent to the UE by the network anytime or at any specific occasion. For example the request for the capability reporting can be sent to the UE during initial setup or after a cell change such as handover, RRC connection re-establishment, RRC connection release with redirection, PCell change in CA, PCC change in PCC etc.

Usage of received capability information by the network node

The network node such as the serving eNode B, serving RNC and so forth may use the received UE capability information for performing one or more radio operational tasks related to EWS interference management or handling. For example if the UE does not support this capability then the network node may itself detect EWS interference and apply one or more mechanisms to mitigate the interference in both UL and DL. If the UE supports certain type of mitigation scheme, e.g. limiting output power, then the network may configure the UE with an appropriate value of max power threshold.

The network node may also forward the received UE capability information to some other network node, e.g. to a neighboring radio network node, SON, positioning node and so forth. This will prevent the UE from again signaling its capability to a new serving radio node after cell change.

It will be appreciated that the methods and mechanisms described above can be combined and re-arranged in a variety of ways.

For example, embodiments may be implemented in hardware, or in software for execution by suitable processing circuitry, or a combination thereof.

The steps, functions, procedures, modules and/or blocks described above may be implemented in hardware using any conventional technology, such as discrete circuit or integrated circuit technology, including both general-purpose electronic circuitry and application-specific circuitry.

Particular examples include one or more suitably configured digital signal processors and other known electronic circuits, e.g. discrete logic gates interconnected to perform a specialized function, or Application Specific Integrated Circuits, ASICs.

Alternatively, at least some of the steps, functions, procedures, modules and/or blocks described above may be implemented in software such as a computer program for execution by suitable processing circuitry including one or more processors.

The flow diagram or diagrams presented above may therefore be regarded as a computer flow diagram or diagrams, when performed by one or more processors. A corresponding apparatus may be defined as a group of function modules, where each step performed by the processor corresponds to a function module. In this case, the function modules are implemented as a computer program running on the processor.

Examples of processing circuitry includes, but is not limited to, one or more microprocessors, one or more Digital Signal Processors, DSPs, one or more Central Processing Units, CPUs, video acceleration hardware, and/or any suitable programmable logic circuitry such as one or more Field Programmable Gate Arrays, FPGAs, or one or more Programmable Logic Controllers, PLCs.

It should also be understood that it may be possible to re-use the general processing capabilities of any conventional device, node or unit in which the proposed technology is implemented. It may also be possible to re-use existing software, e.g. by reprogramming of the existing software or by adding new software components.

Figure 16 is a schematic diagram illustrating an example of a User Equipment, UE, operable to enable mitigation of interference between an External Wireless System, EWS, and a mobile communication system. In this example, the UE 100 comprises a detector 110 and a report module 120. The detector 110 is operable to detect an EWS event involving EWS operation interfering with the operation of the mobile communication system provided at least one interference condition is fulfilled. The interference condition(s) includes a first condition based on a frequency relation between a representation of an operating frequency of the EWS and a representation of a reference frequency. The report module 120 is operable to report event information representing the EWS event to a radio network node to enable mitigation of interference.

By way of example, the UE 100 may be operable to receive an optional configuration request from the radio network node including configuration information to enable the UE to detect the EWS event provided the interference condition(s) is/are fulfilled.

For example, the detector 110 may be operable to detect an EWS event involving EWS operation based on a frequency relation between a representation of an operating frequency of the EWS and a representation of an operating frequency of the mobile communication system, as previously explained.

As an example, the report module 120 may be operable to report event information including at least one of: time, location and operating frequency of the EWS event.

Figure 17 is a schematic diagram illustrating an example of a User Equipment, UE, operable to enable mitigation of interference between an External Wireless System, EWS, and a mobile communication system.

In this example, the UE 100 comprises a detector 110 and an interference mitigation module 130. The detector 110 is operable to detect an EWS event involving EWS operation interfering with the operation of the mobile communication system provided at least one interference condition is fulfilled. The interference condition(s) includes a first condition based on a frequency relation between a representation of an operating frequency of the EWS and a representation of a reference frequency. The interference mitigation module 130 is operable to initiate or perform the mitigation of interference based on event information representing the EWS event.

By way of example, the UE 100 may be operable to receive an optional configuration request from a radio network node including configuration information to enable the UE to detect the EWS event provided the interference condition(s) is/are fulfilled.

For example, the detector 110 may be operable to detect an EWS event involving EWS operation based on a frequency relation between a representation of an operating frequency of the EWS and a representation of an operating frequency of the mobile communication system.

Figure 18 is a schematic diagram illustrating an example of a radio network node operable to enable mitigation of interference between an External Wireless System, EWS, and a mobile communication system. In this example, the radio network node 200 comprises a configuration module 210 and a receiver 220. The configuration module 210 is operable to configure a User Equipment, UE, or other network node for detecting and reporting an EWS event involving EWS operation interfering with the operation of the mobile communication system provided at least one interference condition is fulfilled. The interference condition(s) includes a first condition based on a frequency relation between a representation of an operating frequency of the EWS and a representation of a reference frequency. The receiver 220 is operable to receive event information representing the EWS event from the UE or the other network node to enable the mitigation of interference.

By way of example, the receiver 220 may be operable to receive event information including at least one of: time, location and operating frequency of the EWS event.

For example, the configuration module 210 may be operable to configure the UE or the other network node for detecting and reporting an EWS event involving EWS operation based on a frequency relation between a representation of an operating frequency of the EWS and a representation of an operating frequency of the mobile communication system.

Optionally, the configuration module 210 is operable to send a configuration request to the UE including configuration information to enable the UE to detect and report the EWS event provided the interference condition(s) is/are fulfilled.

The radio network node may further comprise an optional (dashed lines) interference mitigation module 230, which is operable to initiate or perform the mitigation of interference between the EWS and the mobile communication system based on the event information.

As an example, the optional interference mitigation module 230 is operable to change the carrier frequency of the UE in dependence on the event information in order to mitigate interference between the EWS and the mobile communication system.

Alternatively, or as a complement, the interference mitigation module 230 may be operable to provide a recommendation to the EWS to apply interference mitigation based on the event information.

As previously exemplified, the radio network node 200 may be a base station serving the UE.

As a non-limiting example, the UE and/or radio network node may be implemented based on a processor and an associated memory. In this particular example, at least some of the steps, functions, procedures, modules and/or blocks described above are implemented in a computer program, which is loaded into the memory for execution by the processing circuitry such as a processor. The processor and memory are interconnected to each other to enable normal software execution. An optional input/output device may also be interconnected to the processor and/or memory to enable input and/or output of relevant data such as input parameter(s) and/or resulting output parameter(s).

Figure 19 is a schematic diagram illustrating an example of a User Equipment, UE, operable to enable mitigation of interference between an External Wireless System, EWS, and a mobile communication system. In this example, the UE 100 comprises a processor 150, an associated memory 160 and an optional communication circuitry 170. The optional communication circuitry 170 is adapted for wireless communication with one or more other nodes, including transmitting and/or receiving information.

Figure 20 is a schematic diagram illustrating an example of a radio network node operable to enable mitigation of interference between an External Wireless System, EWS, and a mobile communication system.

In this example, the radio network node 200 comprises a processor 250, an associated memory 260 and an optional communication circuitry 270. The optional communication circuitry 270 is adapted for wireless and/or wired communication with one or more other nodes, including transmitting and/or receiving information.

The term processor should be interpreted in a general sense as any system or device capable of executing program code or computer program instructions to perform a particular processing, determining or computing task.

In a particular embodiment, the computer program comprises program code which when executed by the processor causes the processor to execute the above-described steps, functions, procedure and/or blocks.

As indicated above, the UE or wireless device may alternatively be defined as a group of function modules, where the function modules are implemented as a computer program running on a processor.

The computer program residing in memory may thus be organized as appropriate function modules configured to perform, when executed by the processor, at least part of the steps and/or tasks described above. An example of such function modules is illustrated in Figure 21.

Figure 21 is a schematic diagram illustrating an example of a wireless device operable to enable mitigation of interference between an External Wireless System, EWS, and a mobile communication system. In this example, the wireless device 500 comprises a detection module 510 and an enabling module 520. The detection module 510 is adapted for detecting an EWS event involving EWS operation interfering with the operation of the mobile communication system provided at least one interference condition is fulfilled. The interference condition(s) includes a first condition based on a frequency relation between a representation of an operating frequency of the EWS and a representation of a reference frequency. The enabling module 520 is adapted for enabling the mitigation of interference based on event information representing the EWS event.

The software or computer program may be realized as a computer program product, which is normally carried or stored on a computer-readable medium. The computer-readable medium may include one or more removable or non-removable memory devices including, but not limited to a Read-Only Memory, ROM, a Random Access Memory, RAM, a Compact Disc, CD, a Digital Versatile Disc, DVD, a Universal Serial Bus, USB, memory, a Hard Disk Drive, HDD storage device, a flash memory, or any other conventional memory device. The computer program may thus be loaded into the operating memory of a computer or equivalent processor for execution.

For example, the computer program includes instructions executable by the processor, whereby the processor is able or operative to execute the above-described steps, functions, procedure and/or blocks.

The processor does not have to be dedicated to only execute the above-described steps, functions, procedure and/or blocks, but may also execute other tasks.

The embodiments described above are merely given as examples, and it should be understood that the proposed technology is not limited thereto. The present scope is defined by the appended claims.

## ABBREVIATIONS

| | |
|---|---|
| 3GPP | 3rd Generation Partnership Project |
| 4C | 4 Carriers |
| ARIB | Association of Radio Industries and Businesses |
| ANR | Automatic neighbor relation |
| AoA | Angle of Arrival |
| ARFCN | Evolved absolute radio frequency channel number |
| BEM | Block Edge Mask |
| BS | Base Station |
| BSC | BS controller |
| CA | Carrier Aggregation |
| CEPT | European Conference of Postal and Telecommunications Administrations |
| CC | Component Carrier |
| CCSA | China Communications Standards Association |
| CGI | Cell global identifier |
| CM | Compressed Mode |
| CoMP | Coordinated Multiple Point Transmission and Reception |
| CSI | Channel State Information |
| DL | Downlink |
| EARFCN | Evolved absolute radio frequency channel number |

EP 3 056 041 B1

| | |
|---|---|
| E-CID | Enhanced Cell ID |
| eNB | enhanced Node B |
| E-SMLC | Evolved SMLC |
| EDGE | Enhanced Data rates for GSM Evolution |
| EWS | External Wireless System |
| FCC | Federal Communications Commissions |
| FDD | Frequency Division Duplex |
| GSM | Global System for Mobile Communications |
| HO | Hand Over |
| HSPA | High-Speed Packet Access |
| LPP | LTE positioning protocol |
| LPPa | LTE positioning protocol annex |
| LTE | Long Term Evolution |
| MAC | Medium Access Control |
| MBAN | Medical Body Network |
| MCS | Modulation and Coding Scheme |
| MDT | Minimization of Drive Tests |
| MME | Mobility management entity |
| MMS | Multimedia Messaging Service |
| O&M | Operational and Maintenance |
| OSS | Operational Support Systems |
| OTDOA | Observed time difference of arrival |
| PCC | Primary Component Carrier |
| PCell | Primary Cell |
| PCI | Physical Cell Identity |
| PDCCH | Physical Downlink Control CHannel |
| PDSCH | Physical Downlink Shared CHannel |
| PMSE | Programme Making and Special Event |
| PSC | Primary Serving Cell |
| PUCCH | Physical Uplink Control CHannel |
| PUSCH | Physical Uplink Shared Channel |
| RAT | Radio Access technology |
| RFID | Radio Frequency Identification |
| RSRP | Reference Signal Received Power |
| RSRQ | Reference Signal Received Quality |
| SCC | Secondary Component Carrier |
| SF | SubFrame |
| SMS | Short Message Service |
| SRD | Short Range Device |
| SSC | Secondary Serving Cell |
| TDD | Time Division Duplex |
| UE | User Equipment |
| UL | Uplink |
| UTRA | Universal Terrestrial Radio Access |
| WCDMA | Wideband Code Division Multiple Access |

**REFERENCES**

[1] Electronic Communications Committee Report "*Adjacent band compatibility between MFCN and PMSE audio applications in the 1800 MHz range*".

**Claims**

1. A method performed by a User Equipment, UE, (100) for enabling mitigation of interference between an External Wireless System, EWS, (300) and a mobile communication system (400), wherein the EWS (300) is a system that is external with respect to the mobile communication system (400), wherein the EWS (300) operates at another operating frequency, $F_{EWS}$, that is adjacent to an operating frequency, $F_R$, of the mobile communication system (400), said method comprising the steps of:

- detecting (S1) an EWS event involving EWS operation interfering with the operation of the mobile communication system (400), provided interference conditions are fulfilled, wherein said interference conditions include a first condition based on a frequency relation between the operating frequency, $F_{EWS}$, of the EWS (300) and the operating frequency, $F_R$, of the mobile communication system (400) and a second condition based on information regarding a location of the EWS event, and wherein the frequency relation represents whether the operating frequency, $F_{EWS}$, of the EWS (300) and the operating frequency, $F_R$, of the mobile communication system (400) are within a pre-defined range; and
- reporting (S2-1A) event information including at least one of time, the location, and the operating frequency of said EWS event to a radio network node (200) to enable said mitigation of interference.

2. The method of claim 1, wherein said UE (100) receives a configuration request, from said radio network node (200), including configuration information to enable said UE (100) to detect said EWS event, provided said interference conditions are fulfilled.

3. The method of claim 2, wherein said configuration information includes at least information about said frequency relation.

4. The method of any of claims 1 to 3, wherein said first condition involves a function $g$ relating a representation of the operating frequency, $F_{EWS}$, of the EWS (300) and a representation of the operating frequency, $F_R$, of the mobile communication system (400) and said first condition is fulfilled provided at least one of the following is valid:

$$\left| F_R - g(F_{EWS}) \right| \le \Delta f_R$$

and

$$\left| F_{EWS} - g^{-1}(F_R) \right| \le \Delta f_{EWS}$$

where $\Delta f_R$ and $\Delta f_{EWS}$ are respective margins,
wherein the function $g$ is expressed as:

$$F_R' = g(F_{EWS}, \alpha),$$

where $\alpha$ is used to relate the operating frequency, $F_{EWS}$, of the EWS (300) and an estimated operating frequency, $F_R'$, of the mobile communication system (400), and wherein the estimation of the operating frequency, $F_R$, is based on said frequency relation.

5. A method performed by a radio network node (200) for enabling mitigation of interference between an External Wireless System, EWS, (300) and a mobile communication system (400), wherein the EWS (300) is a system that is external with respect to the mobile communication system (400), wherein the EWS (300) operates at another operating frequency, $F_{EWS}$, that is adjacent to an operating frequency, $F_R$, of the mobile communication system (400), said method comprising the steps of:

- configuring (S11) a User Equipment, UE, or another network node for detecting and reporting an EWS event involving EWS operation interfering with the operation of the mobile communication system (400), provided interference conditions are fulfilled, wherein said interference conditions include a first condition based on a frequency relation between the operating frequency, $F_{EWS}$, of the EWS (300) and the operating frequency, $F_R$, of the mobile communication system (400) and a second condition based on information regarding a location of the EWS event, and wherein the frequency relation represents whether the operating frequency, $F_{EWS}$, of the EWS (300) and the operating frequency, $F_R$, of the mobile communication system (400) are within a pre-defined range; and
- receiving (S12) event information including at least one of time, the location, and the operating frequency of said EWS event from said UE or said another network node to enable said mitigation of interference.

6. A User Equipment, UE, (100) operable to enable mitigation of interference between an External Wireless System, EWS, (300) and a mobile communication system (400), wherein the EWS (300) is a system that is external with respect to the mobile communication system (400), wherein the EWS (300) operates at another operating frequency, $F_{EWS}$, that is adjacent to an operating frequency, $F_R$, of the mobile communication system (400), said UE (100) comprising:

- a detector (110) operable to detect an EWS event involving EWS operation interfering with the operation of the mobile communication system (400), provided interference conditions are fulfilled, wherein said interference conditions include a first condition based on a frequency relation between the operating frequency, $F_{EWS}$, of the EWS (300) and the operating frequency, $F_R$, of the mobile communication system (400) and a second condition based on information regarding a location of the EWS event, and wherein the frequency relation represents whether the operating frequency, $F_{EWS}$, of the EWS (300) and the operating frequency, $F_R$, of the mobile communication system (400) are within a pre-defined range; and
- a report module (120) operable to report event information including at least one of time, the location, and the operating frequency of said EWS event to a radio network node (200) to enable said mitigation of interference.

7. The user equipment of claim 6, wherein said UE (100) is operable to receive a configuration request, from said radio network node (200), including configuration information to enable said UE (100) to detect said EWS event, provided said interference conditions are fulfilled, and wherein said configuration information includes at least information about the frequency relation.

8. A radio network node (200) operable to enable mitigation of interference between an External Wireless System, EWS, (300) and a mobile communication system (400), wherein the EWS (300) is a system that is external with respect to the mobile communication system (400), wherein the EWS (300) operates at another operating frequency, $F_{EWS}$, that is adjacent to an operating frequency, $F_R$, of the mobile communication system (400), said radio network node (200) comprising:

- a configuration module (210) operable to configure a User Equipment, UE, (100) or another network node for detecting and reporting an EWS event involving EWS operation interfering with the operation of the mobile communication system (400), provided interference conditions are fulfilled, wherein said interference conditions include a first condition based on a frequency relation between the operating frequency, $F_{EWS}$, of the EWS (300) and the operating frequency, $F_R$, of the mobile communication system (400) and a second condition based on information regarding a location of the EWS event, and wherein the frequency relation represents whether the operating frequency, $F_{EWS}$, of the EWS (300) and the operating frequency, $F_R$, of the mobile communication system (400) are within a pre-defined range; and
- a receiver (220) operable to receive event information including at least one of time, the location, and the operating frequency of said EWS event from said UE (100) or said another network node to enable said mitigation of interference.

**Patentansprüche**

1. Verfahren, durchgeführt durch ein Benutzergerät (UE) (100), zum Ermöglichen einer Interferenzminderung zwischen einem externen drahtlosen System (EWS) (300) und einem Mobilkommunikationssystem (400), wobei das EWS (300) ein System ist, das in Bezug auf das Mobilkommunikationssystem (400) extern ist, wobei das EWS (300) mit einer anderen Betriebsfrequenz ($F_{EWS}$) arbeitet, die benachbart zu einer Betriebsfrequenz ($F_R$) des Mobilkommunikationssystems (400) liegt, wobei das Verfahren die folgenden Schritte umfasst:

- Erfassen (S1) eines EWS-Vorgangs, der involviert, dass der EWS-Betrieb den Betrieb des Mobilkommunikationssystems (400) stört, vorausgesetzt, dass Interferenzbedingungen erfüllt sind, wobei die Interferenzbedingungen eine erste Bedingung auf Grundlage einer Frequenzbeziehung zwischen der Betriebsfrequenz ($F_{EWS}$) des EWS (300) und der Betriebsfrequenz ($F_R$) des Mobilkommunikationssystems (400) und eine zweite Bedingung auf Grundlage von Informationen hinsichtlich eines Standorts des EWS-Vorgangs beinhalten, und wobei die Frequenzbeziehung darstellt, ob die Betriebsfrequenz ($F_{EWS}$) des EWS (300) und die Betriebsfrequenz ($F_R$)

des Mobilkommunikationssystems (400) innerhalb eines vordefinierten Bereichs liegen; und
- Berichten (S2-1A) von Vorgangsinformationen, die mindestens eines von Zeit, Standort und Betriebsfrequenz des EWS-Vorgangs beinhalten, an einen Funknetzwerkknoten (200), um die Interferenzminderung zu ermöglichen.

2. Verfahren nach Anspruch 1, wobei das UE (100) eine Konfigurationsanforderung von dem Funknetzwerkknoten (200) empfängt, die Konfigurationsinformationen beinhaltet, um dem UE (100) zu ermöglichen, den EWS-Vorgang zu erfassen, vorausgesetzt, dass die Interferenzbedingungen erfüllt sind.

3. Verfahren nach Anspruch 2, wobei die Konfigurationsinformationen mindestens Informationen über die Frequenzbeziehung beinhalten.

4. Verfahren nach einem der Ansprüche 1 bis 3, wobei die erste Bedingung eine Funktion $g$ bezüglich einer Darstellung der Betriebsfrequenz ($F_{EWS}$) des EWS (300) und einer Darstellung der Betriebsfrequenz ($F_R$) des Mobilkommunikationssystems (400) involviert und die erste Bedingung erfüllt ist, vorausgesetzt, mindestens eines von Folgenden ist gültig:

$$\left| F_R - g(F_{EWS}) \right| \leq \Delta f_R$$

und

$$\left| F_{EWS} - g^{-1}(F_R) \right| \leq \Delta f_{EWS}$$

wobei $\Delta f_R$ und $\Delta f_{EWS}$ jeweilige Spannen sind,
wobei die Funktion $g$ ausgedrückt ist als:

$$F_R{}' = g(F_{EWS}, \alpha),$$

wobei $\alpha$ verwendet wird, um die Betriebsfrequenz ($F_{EWS}$) des EWS (300) und eine geschätzte Betriebsfrequenz ($F_R'$) des Mobilkommunikationssystems (400) in Beziehung zu setzen, und wobei die Schätzung der Betriebsfrequenz ($F_R$) auf der Frequenzbeziehung basiert.

5. Verfahren, durchgeführt durch einen Funknetzwerkknoten (200) zum Ermöglichen einer Interferenzminderung zwischen einem externen drahtlosen System (EWS) (300) und einem Mobilkommunikationssystem (400), wobei das EWS (300) ein System ist, das in Bezug auf das Mobilkommunikationssystem (400) extern ist, wobei das EWS (300) mit einer anderen Betriebsfrequenz ($F_{EWS}$) arbeitet, die benachbart zu einer Betriebsfrequenz ($F_R$) des Mobilkommunikationssystems (400) liegt, wobei das Verfahren die folgenden Schritte umfasst:

- Konfigurieren (S11) eines Benutzergeräts (UE) oder eines anderen Netzwerkknotens zum Erfassen und Berichten eines EWS-Vorgangs, der involviert, dass der EWS-Betrieb den Betrieb des Mobilkommunikationssystems (400) stört, vorausgesetzt, dass Interferenzbedingungen erfüllt sind, wobei die Interferenzbedingungen eine erste Bedingung auf Grundlage einer Frequenzbeziehung zwischen der Betriebsfrequenz ($F_{EWS}$) des EWS (300) und der Betriebsfrequenz ($F_R$) des Mobilkommunikationssystems (400) und eine zweite Bedingung auf Grundlage von Informationen hinsichtlich eines Standorts des EWS-Vorgangs beinhalten, und wobei die Frequenzbeziehung darstellt, ob die Betriebsfrequenz ($F_{EWS}$) des EWS (300) und die Betriebsfrequenz ($F_R$) des Mobilkommunikationssystems (400) innerhalb eines vordefinierten Bereichs liegen; und
- Empfangen (S12) von Vorgangsinformationen, die mindestens eines von Zeit, Standort und Betriebsfrequenz des EWS-Vorgangs beinhalten, von dem UE oder dem anderen Netzwerkknoten, um die Interferenzminderung zu ermöglichen.

6. Benutzergerät (UE) (100), betreibbar zum Ermöglichen einer Interferenzminderung zwischen einem externen drahtlosen System (EWS) (300) und einem Mobilkommunikationssystem (400), wobei das EWS (300) ein System ist, das in Bezug auf das Mobilkommunikationssystem (400) extern ist, wobei das EWS (300) mit einer anderen Betriebsfrequenz ($F_{EWS}$) arbeitet, die benachbart zu einer Betriebsfrequenz ($F_R$) des Mobilkommunikationssystems (400) liegt, wobei das UE (100) Folgendes umfasst:

- einen Detektor (110), betreibbar zum Erfassen eines EWS-Vorgangs, der involviert, dass der EWS-Betrieb den Betrieb des Mobilkommunikationssystems (400) stört, vorausgesetzt, dass Interferenzbedingungen erfüllt sind, wobei die Interferenzbedingungen eine erste Bedingung auf Grundlage einer Frequenzbeziehung zwischen der Betriebsfrequenz ($F_{EWS}$) des EWS (300) und der Betriebsfrequenz ($F_R$) des Mobilkommunikationssystems (400) und eine zweite Bedingung auf Grundlage von Informationen hinsichtlich eines Standorts des EWS-Vorgangs beinhalten, und wobei die Frequenzbeziehung darstellt, ob die Betriebsfrequenz ($F_{EWS}$) des EWS (300) und die Betriebsfrequenz ($F_R$) des Mobilkommunikationssystems (400) innerhalb eines vordefinierten Bereichs liegen; und
- ein Berichtsmodul (120), betreibbar zum Berichten von Vorgangsinformationen, die mindestens eines von Zeit, Standort und Betriebsfrequenz des EWS-Vorgangs beinhalten, an einen Funknetzwerkknoten (200), um die Interferenzminderung zu ermöglichen.

7. Benutzergerät nach Anspruch 6, wobei das UE (100) betreibbar ist, um eine Konfigurationsanforderung von dem Funknetzwerkknoten (200) zu empfangen, die Konfigurationsinformationen beinhaltet, um dem UE (100) zu ermöglichen, den EWS-Vorgang zu erfassen, vorausgesetzt, dass die Interferenzbedingungen erfüllt sind, und wobei die Konfigurationsinformationen mindestens Informationen über die Frequenzbeziehung beinhalten.

8. Funknetzwerkknoten (200), betreibbar zum Ermöglichen einer Interferenzminderung zwischen einem externen drahtlosen System (EWS) (300) und einem Mobilkommunikationssystem (400), wobei das EWS (300) ein System ist, das in Bezug auf das Mobilkommunikationssystem (400) extern ist, wobei das EWS (300) mit einer anderen Betriebsfrequenz ($F_{EWS}$) arbeitet, die benachbart zu einer Betriebsfrequenz ($F_R$) des Mobilkommunikationssystems (400) liegt, wobei der Funknetzwerkknoten (200) Folgendes umfasst:

- ein Konfigurationsmodul (210), betreibbar zum Konfigurieren eines Benutzergeräts (UE) (100) oder eines anderen Netzwerkknotens zum Erfassen und Berichten eines EWS-Vorgangs, der involviert, dass der EWS-Betrieb den Betrieb des Mobilkommunikationssystems (400) stört, vorausgesetzt, dass Interferenzbedingungen erfüllt sind, wobei die Interferenzbedingungen eine erste Bedingung auf Grundlage einer Frequenzbeziehung zwischen der Betriebsfrequenz ($F_{EWS}$) des EWS (300) und der Betriebsfrequenz ($F_R$) des Mobilkommunikationssystems (400) und eine zweite Bedingung auf Grundlage von Informationen hinsichtlich eines Standorts des EWS-Vorgangs beinhalten, und wobei die Frequenzbeziehung darstellt, ob die Betriebsfrequenz ($F_{EWS}$) des EWS (300) und die Betriebsfrequenz ($F_R$) des Mobilkommunikationssystems (400) innerhalb eines vordefinierten Bereichs liegen; und
- einen Empfänger (220), betreibbar zum Empfangen von Vorgangsinformationen, die mindestens eines von Zeit, Standort und Betriebsfrequenz des EWS-Vorgangs beinhalten, von dem UE (100) oder dem anderen Netzwerkknoten, um die Interferenzminderung zu ermöglichen.

**Revendications**

1. Procédé exécuté par un équipement utilisateur, UE, (100) pour l'activation de limitation de brouillage entre un système sans fil externe, EWS, (300) et un système de communication mobile (400), dans lequel l'EWS (300) est un système externe par rapport au système de communication mobile (400), dans lequel l'EWS (300) fonctionne à une autre fréquence de fonctionnement, $F_{EWS}$, qui est adjacente à une fréquence de fonctionnement, $F_R$, du système de communication mobile (400), ledit procédé comprenant les étapes de :

- détection (S1) d'un événement EWS impliquant un fonctionnement EWS interférant avec le fonctionnement du système de communication mobile (400), à condition que les conditions de brouillage soient remplies, dans lequel lesdites conditions de brouillage comportent une première condition basée sur une relation de fréquence entre la fréquence de fonctionnement, $F_{EWS}$, de l'EWS (300) et la fréquence de fonctionnement, $F_R$, du système de communication mobile (400) et une seconde condition basée sur des informations concernant un emplacement de l'événement EWS, et dans lequel la relation de fréquence indique si la fréquence de fonctionnement, $F_{EWS}$, de l'EWS (300) et la fréquence de fonctionnement, $F_R$, du système de communication mobile (400) sont dans une plage prédéfinie ; et
- communication (S2-1 A) des informations d'événement comportant au moins l'un parmi l'heure, l'emplacement et la fréquence de fonctionnement dudit événement EWS à un nœud de réseau radio (200) pour activer ladite limitation de brouillage.

2. Procédé selon la revendication 1, dans lequel ledit UE (100) reçoit une demande de configuration, dudit nœud de réseau radio (200), comportant des informations de configuration pour permettre audit UE (100) de détecter ledit événement EWS, à condition que lesdites conditions de brouillage soient remplies.

3. Procédé selon la revendication 2, dans lequel lesdites informations de configuration comportent au moins des informations sur ladite relation de fréquence.

4. Procédé selon l'une quelconque des revendications 1 à 3, dans lequel ladite première condition implique une fonction g associant une représentation de la fréquence de fonctionnement, $F_{EWS}$, de l'EWS (300) et une représentation de la fréquence de fonctionnement, $F_R$, du système de communication mobile (400) et ladite première condition est remplie à condition qu'au moins l'une des conditions suivantes soit valide :

$$| \ F_R \ - \ g(F_{EWS}) \ | \leq \ \Delta f_R$$

et

$$| \ F_{EWS} \ - \ g^{-1}(F_R) \ | \leq \ \Delta f_{EWS}$$

où $\Delta f_R$ et $\Delta f_{EWS}$ sont des marges respectives,
dans lequel la fonction g est exprimée par :

$$F_R' \ = \ g(F_{EWS}, \ \alpha),$$

où $\alpha$ est utilisé pour associer la fréquence de fonctionnement, $F_{EWS}$, de l'EWS (300) et une fréquence de fonctionnement estimée, $F_R'$, du système de communication mobile (400), et dans lequel l'estimation de la fréquence de fonctionnement, $F_R$, est basée sur ladite relation de fréquence.

5. Procédé exécuté par un nœud de réseau radio (200) pour l'activation de limitation de brouillage entre un système sans fil externe, EWS, (300) et un système de communication mobile (400), dans lequel l'EWS (300) est un système externe par rapport au système de communication mobile (400), dans lequel l'EWS (300) fonctionne à une autre fréquence de fonctionnement, $F_{EWS}$, qui est adjacente à une fréquence de fonctionnement, $F_R$, du système de communication mobile (400), ledit procédé comprenant les étapes de :

- configuration (S11) d'un équipement utilisateur, UE, ou d'un autre nœud de réseau pour détecter et communiquer un événement EWS impliquant un fonctionnement EWS interférant avec le fonctionnement du système de communication mobile (400), à condition que les conditions de brouillage soient remplies, dans lequel lesdites conditions de brouillage comportent une première condition basée sur une relation de fréquence entre la fréquence de fonctionnement, $F_{EWS}$, de l'EWS (300) et la fréquence de fonctionnement, $F_R$, du système de communication mobile (400) et une seconde condition basée sur des informations concernant un emplacement de l'événement EWS, et dans lequel la relation de fréquence indique si la fréquence de fonctionnement, $F_{EWS}$, de l'EWS (300) et la fréquence de fonctionnement, $F_R$, du système de communication mobile (400) sont dans une plage prédéfinie ; et
- réception (S12) des informations d'événement comportant au moins l'un parmi l'heure, l'emplacement et la fréquence de fonctionnement dudit événement EWS dudit UE ou dudit autre nœud de réseau pour activer ladite limitation de brouillage.

6. Équipement utilisateur, UE, (100) pouvant être utilisé pour activer la limitation de brouillage entre un système sans fil externe, EWS, (300) et un système de communication mobile (400), dans lequel l'EWS (300) est un système externe par rapport au système de communication mobile (400), dans lequel l'EWS (300) fonctionne à une autre fréquence de fonctionnement, $F_{EWS}$, qui est adjacente à une fréquence de fonctionnement, $F_R$, du système de communication mobile (400), ledit UE (100) comprenant :

- un détecteur (110) pouvant être utilisé pour détecter un événement EWS impliquant un fonctionnement EWS interférant avec le fonctionnement du système de communication mobile (400), à condition que les conditions de brouillage soient remplies, dans lequel lesdites conditions de brouillage comportent une première condition basée sur une relation de fréquence entre la fréquence de fonctionnement, $F_{EWS}$, de l'EWS (300) et la fréquence de fonctionnement, $F_R$, du système de communication mobile (400) et une seconde condition basée sur des informations concernant un emplacement de l'événement EWS, et dans lequel la relation de fréquence indique si la fréquence de fonctionnement, $F_{EWS}$, de l'EWS (300) et la fréquence de fonctionnement, $F_R$, du système de communication mobile (400) sont dans une plage prédéfinie ; et

- un module de rapport (120) pouvant être utilisé pour communiquer des informations d'événement comportant au moins l'un parmi l'heure, l'emplacement et la fréquence de fonctionnement dudit événement EWS à un nœud de réseau radio (200) pour activer ladite limitation de brouillage.

7. Équipement utilisateur selon la revendication 6, dans lequel ledit UE (100) peut être utilisé pour recevoir une demande de configuration, dudit nœud de réseau radio (200), comportant des informations de configuration pour permettre audit UE (100) de détecter ledit événement EWS, à condition que lesdites conditions de brouillage soient remplies et dans lequel lesdites informations de configuration comportent au moins des informations sur la relation de fréquence.

8. Nœud de réseau radio (200) pouvant être utilisé pour activer la limitation de brouillage entre un système sans fil externe, EWS, (300) et un système de communication mobile (400), dans lequel l'EWS (300) est un système externe par rapport au système de communication mobile (400), dans lequel l'EWS (300) fonctionne à une autre fréquence de fonctionnement, $F_{EWS}$, qui est adjacente à une fréquence de fonctionnement, $F_R$, du système de communication mobile (400), ledit nœud de réseau radio (200) comprenant :

- un module de configuration (210) pouvant être utilisé pour configurer un équipement utilisateur, UE, (100) ou un autre nœud de réseau pour détecter et communiquer un événement EWS impliquant un fonctionnement EWS interférant avec le fonctionnement du système de communication mobile (400), à condition que les conditions de brouillage soient remplies, dans lequel lesdites conditions de brouillage comportent une première condition basée sur une relation de fréquence entre la fréquence de fonctionnement, $F_{EWS}$, de l'EWS (300) et la fréquence de fonctionnement, $F_R$, du système de communication mobile (400) et une seconde condition basée sur des informations concernant un emplacement de l'événement EWS, et dans lequel la relation de fréquence indique si la fréquence de fonctionnement, $F_{EWS}$, de l'EWS (300) et la fréquence de fonctionnement, $F_R$, du système de communication mobile (400) sont dans une plage prédéfinie ; et

- un récepteur (220) pouvant être utilisé pour recevoir des informations d'événement comportant au moins l'un parmi l'heure, l'emplacement et la fréquence de fonctionnement dudit événement EWS dudit UE (100) ou dudit autre nœud de réseau pour activer ladite limitation de brouillage.

INTERFERENCE

EWS

MOBILE
SYSTEM

300

400

*Fig.1*

LTE UL/GSM    EWS (PMSE)    LTE DL

1710    1785    1805    1880

MHz

## Fig. 2

RNN
200

UE
100

400

CN
600

NN
500    550

EWS
300

## Fig. 22

Fig. 3

Fig. 4A

Fig. 4B

Fig. 5A

Fig. 5B

Fig. 6

START

DETECTING AN EWS EVENT INVOLVING EWS
OPERATION INTERFERING WITH THE OPERATION
OF THE MOBILE COMMUNICATION SYSTEM
PROVIDED AT LEAST ONE INTERFERENCE
CONDITION IS FULFILLED
~S1

REPORTING THE EVENT INFORMATION TO A
RADIO NETWORK NODE TO ENABLE MITIGATION
OF INTERFERENCE
~S2-1A

END

*Fig. 7*

START

DETECTING AN EWS EVENT INVOLVING EWS OPERATION INTERFERING WITH THE OPERATION OF THE MOBILE COMMUNICATION SYSTEM PROVIDED AT LEAST ONE INTERFERENCE CONDITION IS FULFILLED — S1

INITIATING OR PERFORMING MITIGATION OF INTERFERENCE BETWEEN THE EWS AND THE MOBILE SYSTEM AT LEAST PARTLY BASED ON THE EVENT INFORMATION — S2-1B

END

## Fig. 8

Fig. 9

START

CONFIGURING A UE OR OTHER NETWORK NODE FOR DETECTING AND REPORTING AN EWS EVENT INVOLVING EWS OPERATION INTERFERING WITH THE OPERATION OF THE MOBILE SYSTEM PROVIDED AT LEAST ONE INTERFERENCE CONDITION IS FULFILLED — S11

RECEIVING EVENT INFORMATION REPRESENTING THE EWS EVENT FROM THE UE OR THE OTHER NETWORK NODE TO ENABLE MITIGATION OF INTERFERENCE — S12

END

*Fig. 10*

START

SENDING A CONFIGURATION REQUEST TO THE UE
OR OTHER NETWORK NODE INCLUDING
CONFIGURATION INFORMATION TO ENABLE THE UE
OR OTHER NETWORK NODE TO DETECT AND
REPORT THE EWS EVENT

S11-1

RECEIVING EVENT INFORMATION
REPRESENTING THE EWS EVENT FROM THE UE
OR THE OTHER NETWORK NODE TO ENABLE
MITIGATION OF INTERFERENCE

S12

END

*Fig. 11*

START

CONFIGURING A UE OR OTHER NETWORK NODE FOR DETECTING AND REPORTING AN EWS EVENT INVOLVING EWS OPERATION INTERFERING WITH THE OPERATION OF THE MOBILE SYSTEM PROVIDED AT LEAST ONE INTERFERENCE CONDITION IS FULFILLED ⟿ S11

RECEIVING EVENT INFORMATION REPRESENTING THE EWS EVENT FROM THE UE OR THE OTHER NETWORK NODE TO ENABLE MITIGATION OF INTERFERENCE ⟿ S12

INITIATING OR PERFORMING MITIGATION OF INTERFERENCE BETWEEN THE EWS AND THE MOBILE SYSTEM BASED ON THE EVENT INFORMATION ⟿ S13

END

Fig. 12

RADIO
NETWORK
NODE

PRECONFIGURATION

UE

CONFIGURATION
REQUEST

DETECT EVENT

CONDITION:
Frequency relation

EVENT INFORMATION

OPTION A:
REPORT

OPTION B:
INITIATE OR
PERFORM
INTERFERENCE
MITIGATION

*Fig. 13*

RADIO
NETWORK
NODE

UE

CONFIGURATION
REQUEST

ADDITIONAL
INFO

EVENT INFORMATION

OPTIONS:

INITIATE OR
PERFORM
INTERFERENCE
MITIGATION

INTERFERENCE
MITIGATION
REQUEST

FWD

INTERFERENCE
MITIGATION
REQUEST

EWS
RECOMMENDATION

*Fig. 14*

*Fig. 15*

*Fig. 16*

CONFIGURATION
REQUEST

110

DETECTOR

INTERFERENCE
MITIGATION
MODULE

130

UE

100

Fig. 17

**CONFIGURATION
REQUEST**

**CONFIGURATION
MODULE**

*210*

*220*

**RECEIVER**

**EVENT
INFORMATION**

*230*

**INTERFERENCE
MITIGATION
MODULE**

*200*
*RADIO NETWORK NODE*

*Fig. 18*

*Fig. 19*

250

PROCESSOR

MEMORY

COMMUNICATION
CIRCUITRY

270

260

RADIO NETWORK NODE

200

## Fig. 20

DETECTION
MODULE

ENABLING
MODULE

510

520

WIRELESS DEVICE

500

## Fig. 21

**EP 3 056 041 B1**

**Patent documents cited in the description**

- US 20120040620 A